# EUROPEAN PATENT SPECIFICATION

(11) **EP 2 636 318 B1**
(45) Date of publication and mention of the grant of the patent: **17.08.2016**
(21) Application number: 11838117.7
(22) Date of filing: 02.11.2011
(51) Int. Cl.: A23L 13/30, A23L 13/60

(54) **METHOD FOR PRODUCING PROCESSED MEAT FOOD AND ENZYME PREPARATION FOR MODIFYING PROCESSED MEAT FOOD**
VERFAHREN ZUR HERSTELLUNG VON VERARBEITETEM FLEISCH UND ENZYMPRÄPARAT ZUR MODIFIZIERUNG VON VERARBEITETEM FLEISCH
PROCÉDÉ DE FABRICATION DE VIANDES TRANSFORMÉES, ET PRÉPARATION D'ENZYMES POUR LA MODIFICATION DE VIANDES TRANSFORMÉES

(30) Priority: 05.11.2010 JP 2010248100; 05.11.2010 JP 2010248099
(43) Date of publication of application: 11.09.2013
(73) Proprietor: Ajinomoto Co., Inc., Tokyo 104-8315 (JP)
(72) Inventor: YAMADA, Noriaki, Kawasaki-shi Kanagawa 210-8681 (JP); HIROSE, Fumiyuki, Kawasaki-shi Kanagawa 210-8681 (JP)
(74) Representative: Strehl Schübel-Hopf & Partner
(86) International application number: PCT/JP2011/075888
(87) International publication number: WO 2012/060470

(56) References cited:
- WO-A1-2005/032279
- WO-A1-2006/098510
- CN-B- 1 923 050
- JP-A- 7 155 138
- JP-A- 2011 147 373
- JP-A- 2011 193 830
- JP-B- 57 021 969
- JP-B2- 2 705 024
- JP-B2- 3 940 816
- DATABASE WPI Week 201045 Thomson Scientific, London, GB; AN 2010-H50041 XP002720732, "Production of single-ingredient meat product e.g. ham, bacon and roasted pork, involves using transglutaminase and magnesium chloride", & WO 2010/074338 A1 (AJINOMOTO CO INC) 1 July 2010 (2010-07-01)

## Description

### Technical Field

The present invention relates to a method for producing a processed meat food comprising using arginine or its salt and transglutaminase and a calcium salt or a magnesium salt.

### Background Art

In the field of processed meat foods, there are a variety of needs. For example, in processed products using a finely minced meat such as finely minced sausages, firm chewiness or elasticity is required; in processed products using a coarsely minced meat such as hamburger steaks, a granular texture of meat is required; and in processed products using a single slice meat such as fried chickens and fried pork cutlets, tenderness or a natural fibrous texture is required. In addition, improvements of yield and juicy texture are required in common with all of them. In order to solve these problems, a number of modification techniques have already been adopted. In particular, the use of a polyphosphate is very effective, so that the polyphosphate is extremely generally used in a production process of processed meat foods. But, while a number of needs can be realized, there is also involved such a drawback that the granular texture of meat or fibrous texture is lowered. In addition, it has been gradually elucidated that a phosphate loses a balance between calcium and phosphorus in living bodies, and in particular, the polyphosphate insolubilizes calcium due to a strong metal blocking ability thereof, thereby hindering its absorption. In the course of an increase of the amount of consumption of processed foods using frequently the phosphate, it has been being considered that excessive ingestion of a phosphate is problematic from the standpoint of nutrition.

Accordingly, in recent years, a modification technique in which a polyphosphate is not used has gotten attention, and a modification method of processed meat foods using transglutaminase is disclosed (Japanese Patent No. 2705024). However, though a part of needs in the food texture is satisfied, problems such as a lowering of yield, etc. remain. Furthermore, a modification method of processed meat foods using transglutaminase, calcium oxide, and trisodium citrate (Japanese Patent No. 4385632) or the like is disclosed, too. But, in this method, though the modification effect of food texture is very high, a strong alkali raw material is used, and hence, it is difficult to use an acidic bacteriostatic agent. A method of using a combination of transglutaminase and magnesium chloride for hams (WO2010-074338) is disclosed, too. Though very high effects in hardness and binding properties of hams are exhibited, a more enhancement in the yield is expected. As for a combination of an enzyme and a salt, a method of using transglutaminase and calcium chloride or magnesium chloride in producing a bound and formed food (WO2010-035856) is disclosed. However, this method is concerned with knowledge specialized in binding strength or appearance, and an effect for modifying the food texture is not mentioned therein.

As for a method of modifying meat foods without using an enzyme, a number of knowledge has been reported. For example, a method of using a combination of calcium chloride and magnesium chloride together with sodium chloride (JP-A-2004-242674) is disclosed. However, modification effects of elasticity and binding properties were insufficient. In addition, a method of using a basic amino acid such as arginine, etc. (JP-B-57-021969) is very effective. A method of using a combination of arginine and a protein hydrolysate or the like (JP-A-7-155138), a method of using an emulsion composed of a basic amino acid such as arginine, etc. , fat and oil, and an emulsifier (JP-A-2002-199859), and the like are disclosed, too. In all of these methods, though high modification effects are obtained, it has not been attained yet to substitute the advantages of the phosphate and to overcome the drawbacks of the phosphate. A method of using a combination of arginine, a roast salt, glutathione, a sugar alcohol, a processed starch, and the like (WO2005-032279) is disclosed, too. Though very high effects are exhibited, the processed starch is used, so that a precipitate is formed. Hence, a more enhancement of handling adaptability is expected.

In the light of the above, though an extraordinary number of knowledge regarding the modification method of processed meat foods has been reported, there is no precedent in which a combination of transglutaminase and arginine is used. It has not been able to easily suppose that an effect due to a combination of these materials is not a simple additive effect. A method of enhancing the preservability of foods by using a combination of protamine that is an arginine-rich protein and transglutaminase (Japanese Patent No. 3940816) is known. In this method, however, the evaluation regarding antimicrobial properties is focused, the food texture or yield is not evaluated in detail, and comparison with arginine is not made.

In addition, there is no precedent in which a combination of transglutaminase, arginine, and a calcium salt or a magnesium salt is used, and it has not been able to easily suppose that an effect due to a combination of these materials is not a simple additive effect.

### Summary of Invention

An object of the present invention is to provide a method for producing a processed meat food having improved physical properties, yield, and taste of food.

The present inventors made extensive and intensive investigations. As a result, it has been found that the foregoing object can be attained by producing a processed meat food by using arginine or its salt, transglutaminase, and a calcium salt or a magnesium salt, leading to accomplishment of the present invention. Specifically, the present invention is as follows.
[1] A method for producing a processed meat food from meat raw material derived from pig, cow, fowl, sheep, goat, horse, camel, pigeon, wild duck, domestic duck, quail, or alpaca, comprising: using arginine or its salt and transglutaminase, further comprising using a calcium salt or a magnesium salt, wherein the addition amount of the arginine or its salt is from 0.000001 g to 0.1 g as reduced into arginine per gram of the meat raw material, the addition amount of the transglutaminase is from 0.0001 U to 100 U per gram of the meat raw material, and the addition amount of the calcium salt is from 0.000001 g to 0.05 g as reduced into calcium per gram of the meat raw material, or the addition amount of the magnesium salt is from 0.000001 g to 0.05 g as reduced into magnesium per gram of the meat raw material.
[2] The method according to [1] above, wherein the addition amount of the arginine or its salt is from 0.00001 g to 0.05 g as reduced into arginine per gram of the meat raw material, the addition amount of the transglutaminase is from 0.001 U to 10 U per gram of the meat raw material, and the addition amount of the calcium salt is from 0.00001 g to 0. 02 g as reduced into calcium per gram of the meat raw material, or the addition amount of the magnesium salt is from 0.00001 g to 0.02 g as reduced into magnesium per gram of the meat raw material.
[3] The method according to [1] above, wherein the calcium salt is calcium chloride, or the magnesium salt is magnesium chloride.

The present invention is hereunder described in detail.

In the method for producing a processed meat food according to the present invention, arginine or its salt and transglutaminase and a calcium salt or a magnesium salt are used. Examples of the arginine or its salt include arginine, arginine glutamate, arginine hydrochloride, arginine acetate, arginine butyrate, arginine sulfate, and the like. Besides, any other salts may also be used, and combinations thereof may be used, too. L-isomers, D-isomers, or mixtures thereof may also be used. In addition, as for the arginine or its salt which is used in the present invention, materials produced by any methods such as a fermentation method, an extraction method, etc. may be used. Incidentally, arginine which is marketed by Ajinomoto Co., Inc. is an example thereof.

The transglutaminase refers to an enzyme having an activity to catalyze an acyl transfer reaction in which a glutamine residue acts as a donor, whereas a lysine residue acts as an acceptor, in a protein or peptide, and those of various origins, such as ones derived from mammals, ones derived from fishes, ones derived from microorganisms, etc., are known. As for the enzyme which is used in the present invention, those of any origins may be used so far as they are an enzyme having this activity. In addition, recombinant enzymes may be used, too. Microorganism-derived transglutaminase which is marketed by Ajinomoto Co., Inc. under the trade name of "ACTIVA" TG is an example thereof.

As examples of the calcium salt which can be utilized in the present invention, any calcium salts such as calcium chloride, calcium lactate, calcium carbonate, etc. may be used so far as they are of a grade capable of being used for foods, and anhydrides or hydrates thereof may also be used. In addition, mixtures thereof may be used, too. As examples of the magnesium salt which can be utilized in the present invention, any magnesium salts such as magnesium chloride, magnesium carbonate, magnesium sulfate, etc. may be used so far as they are of a grade capable of being used for foods, and anhydrides or hydrates thereof may also be used. In addition, mixtures thereof may be used, too. Furthermore, a combination of the calcium salt and the magnesium salt may also be used. As for the calcium salt and the magnesium salt, which are used in the present invention, those produced by any methods may be used. Also, the calcium salt and the magnesium salt may be each a mixture with other material or a product obtained by spray drying together with other material. Incidentally, calcium chloride dihydrate and magnesium chloride hexahydrate, each of which is marketed as a food additive, are an example thereof.

Examples of the processed meat food used in the present invention include single piece meat products such as fried chickens, fried pork cutlets, hams, grilled meats, Dong Po Rou, roast pork, etc.; and meat paste products such as sausages, hamburger steaks, meatballs, etc. In addition, frozen products thereof are included, too.

In the case of using arginine or its salt, transglutaminase, and calcium chloride or magnesium chloride for a processed meat food, these materials may be added and allowed to act in any stage at the time of production. These materials may be allowed to act on a part of the raw material, and for example, they may be allowed to act on the raw material meat by the addition to a pickle liquid for marinating or tumbling of fried chickens. Furthermore, arginine or its salt, transglutaminase, and the calcium salt or the magnesium salt may be used in combination with other food raw materials or food additives such as salt, sugars, spices, enzymes, etc. As for the meat raw material, raw materials derived from pigs, cows, fowls, sheep, goats, horses, camels, pigeons, wild ducks, domestic ducks, quails or alpaca are used, and any states or qualities such as raw, dried or heated products, etc. may be used.

In producing a processed meat food, in the case of adding arginine or its salt, transglutaminase, and a calcium salt or a magnesium salt to allow them to act on a meat raw material, the addition amount of the arginine or its salt is properly in the range of from 0.000001 g to 0.1 g, and preferably from 0.00001 g to 0.05 g as reduced into arginine per gram of the meat raw material. Incidentally, the terms "as reduced into arginine" mean a value by multiplying a weight of the arginine salt by a molecular weight of arginine and then dividing by a molecular weight of the arginine salt. For example, in the case of arginine hydrochloride (molecular weight: 210.66), the reduction of 1 g of arginine hydrochloride into arginine reveals 1 g x 174.20 ÷ 210.66 = 0.83 g.

The addition amount of the transglutaminase is properly in the range of from 0.0001 U to 100 U, and preferably from 0.001 U to 10 U per gram of the meat raw material in terms of enzymatic activity. Incidentally, as for the enzymatic activity of the transglutaminase, a reaction is performed using, as substrates, benzyloxycarbonyl-L-glutaminyl glycine and hydroxylamine, the produced hydroxamic acid is converted into an iron complex in the presence of trichloroacetic acid, an absorbance at 525 nm is then measured, and the amount of the hydroxamic acid is determined from a calibration curve thereof, from which is then calculated the activity. The enzyme amount at which 1 µmole of hydroxamic acid is produced at 37°C and a pH of 6.0 for one minute was defined as 1 U (unit).

The addition amount of the calcium salt is properly in the range of from 0.000001 g to 0.05 g, preferably from 0.00001 g to 0.02 g, and more preferably from 0.00001 g to 0.01 g as reduced into calcium per gram of the meat raw material. Incidentally, the terms "as reduced into calcium" mean a value by multiplying a weight of the calcium salt or its hydrate to be used by an atomic weight of calcium and then dividing by a molecular weight of the calcium salt or its hydrate to be used. For example, in the case of anhydrous calcium chloride (molecular weight: 110.98), the reduction of 1 g of anhydrous calcium chloride into calcium reveals 1 g x 40.08 ÷ 110.98 = 0.36 g.

The addition amount of the magnesium salt is properly in the range of from 0.000001 g to 0.05 g, and preferably from 0.00001 g to 0.02 g as reduced into magnesium per gram of the meat raw material. Incidentally, the terms "as reduced into magnesium" mean a value by multiplying a weight of the magnesium salt or its hydrate to be used by an atomic weight of magnesium and then dividing by a molecular weight of the magnesium salt or its hydrate to be used. For example, in the case of anhydrous magnesium chloride (molecular weight: 95.21), the reduction of 1 g of anhydrous magnesium chloride into magnesium reveals 1 g x 24.31 ÷ 95.21 = 0.26 g.

As for an addition amount ratio in the case of using arginine or its salt, transglutaminase, and a calcium salt or a magnesium salt for a processed meat food, the content of the transglutaminase is preferably from 0.1 U to 1,000,000 U, and more preferably from 1 U to 100,000 U per gram of the arginine or its salt as reduced into arginine. In addition, the content of the calcium salt as reduced into calcium is preferably from 0.0001 g to 1,000 g, and more preferably from 0.001 g to 500 g per gram of the arginine or its salt as reduced into arginine. The content of the magnesium salt as reduced into magnesium is preferably from 0.0001 g to 1,000 g, and more preferably from 0.001 g to 500 g per gram of the arginine or its salt as reduced into arginine.

A reaction time of the transglutaminase is not particularly restricted so far as it is a time for which the transglutaminase is able to act on a substrate substance. Though the transglutaminase may be allowed to act for a very short time or conversely for a long time, its practical acting time is preferably from 5 minutes to 24 hours. In addition, as for a reaction temperature, though any temperature may be adopted so far as it falls within the range where the transglutaminase keeps its activity, it is preferable to allow the transglutaminase to act at from 0°C to 80°C as a practical temperature. That is, by allowing the transglutaminase to go through a usual meat processing step, a sufficient reaction time is obtained.

By mixing arginine or its salt, transglutaminase, and a calcium salt or a magnesium salt, an enzyme preparation for modifying a processed meat food can be obtained. Furthermore, bulking agents such as starch, a processed starch, dextrin, etc.; seasonings such as a meat extract, etc.; proteins such as a vegetable protein, gluten, egg white, gelatin, casein, etc.; a protein hydrolyzate, a protein partial decomposition product, an emulsifier, chelating agents such as a citrate, a polyphosphate, etc.; reducing agents such as glutathione, cysteine, etc.; other food additives such as alginic acid, lye water, a pigment, an acidulant, a flavor, etc.; and the like may also be mixed. The enzyme preparation used in the present invention may take any of a liquid form, a paste form, a granular form, or a powdered form. In addition, a blending amount of the arginine or its salt, the transglutaminase, or the calcium salt or the magnesium salt in the enzyme preparation is more than 0% and less than 100%. The content of the transglutaminase is preferably from 0.1 U to 1,000,000 U, and more preferably from 1 U to 100,000 U per gram of the arginine or its salt as reduced into arginine. In addition, the content of the calcium salt as reduced into calcium is preferably from 0.0001 g to 1,000 g, and more preferably from 0.001 g to 500 g per gram of the arginine or its salt as reduced into arginine. The content of the magnesium salt as reduced into magnesium is preferably from 0.0001 g to 1,000 g, and more preferably from 0.001 g to 500 g per gram of the arginine or its salt as reduced into arginine.

### Brief Description of Drawings

FIG. 1 is a graph showing the comparison of a yield of pork gels according to Example 2 of the present invention.
FIG. 2 is a graph showing the comparison of breaking strength of pork gels according to Example 2 of the present invention.
FIG. 3 is a graph showing a physical properties map of pork gels according to Example 3 of the present invention.
FIG. 4 is a graph showing a physical properties map of pork gels according to Comparative Example 1 of the present invention.

### BEST MODES FOR CARRYING OUT THE INVENTION

The present invention is hereunder described in more detail with reference to the Examples.

### Example 1 (Reference only)

After removing fat portions, a pork inside thigh meat (domestically produced single slice meat) was cut into small pieces of about 2 cm cube, which were then minced by a mincer with a 3 mm die, "GREAT MINCE WMG-22" (manufactured by Watanabe Foodmach Co., Ltd.). Thereafter, salt in an amount corresponding to 1% relative to the meat was added, and the resulting meat was further allowed to pass through the foregoing mince thrice, thereby obtaining a meat in a paste form. The obtained meat in a paste form was divided into test plots each having a weight of 100 g, and a solution obtained by previously dissolving each of additives shown in Table 1 in 10 g of distilled water was added to and mixed with 100 g of the meat in a paste form. That is, the system is in a state of 110% water addition relative to the meat. L-Arginine, manufactured by Aj inomoto Co. , Inc. was used as the arginine, and "ACTIVE" TG (manufactured by Aj inomoto Co., Inc.) was used as the transglutaminase. Incidentally, there may be the case where the former is abbreviated and expressed as Arg, and the latter is abbreviated and expressed as TG.

**Table 1**

| Test Plot | 1 | 2 | 3 | 4 | 5 | 6 | 7 |
|---|---|---|---|---|---|---|---|
| Arg (g) | | | 0.3 | 0.15 | | 0.6 | 0.3 |
| TG (U) | | 38 | | 19 | 76 | | 38 |

The meat in a paste form having been added with water by the additive solution was degassed and then packed in a plastic-made casing tube, "KUREHARON FILM" (47 mm x 270 mm) (manufactured by Kureha Corporation), followed by clipping by a clipper. The weight of the meat in a paste form packed in the casing tube was measured. The meat packed in the casing tube was allowed to stand at 5°C for one hour and then heated at 55°C for one hour and at 75°C for one hour using a programmed incubator, "THERMO-HYGROSTAT CHAMBER LH21-13P" (manufactured by Nagano Science Co., Ltd.), thereby obtaining a heated gel of pork. The obtained heated gel was named a pork gel. The pork gel was stored at 5°C for 12 hours and then allowed to stand at room temperature for one hour. The casing of the pork gel was opened, and the moisture attached onto the surface of the pork gel was wiped off by a paper towel, followed by measuring the weight. A heating yield (unit: %) was calculated by means of comparison with the weight of the meat in a paste form before heating. The pork gel was cut into a width of 2 cm, and five cylindrical pork gel pieces were obtained from one pork gel. The 2 cm-wide cylindrical pork gel piece was set in the direction into which a plunger was inserted relative to the curved surface and submitted to a texture analyzer, "TA.XT.plus" (manufactured by Stable Micro Systems). The plunger used a stainless steel-made sphere having a diameter of 7 mm, and a test speed was set at 1 mm/sec. A load at the breaking point was defined as the breaking strength (unit: g), and an average value of five data in each of the test plots was determined and defined as an observed value of the breaking strength. The results are shown in Tables 2 and 3. Incidentally, the addition amount of the arginine was shown in terms of % by weight relative to the meat raw material, and the addition amount of TG was shown in terms of an addition unit (U) per gram of the meat raw material.

In addition, the theoretical yield and breaking strength of a plot added with a combination of TG and arginine were calculated and analyzed based on the results in a plot added with only TG and a plot added with only arginine. For example, in the case of Test Plot 7 added with 0.3% of arginine and 0.38 U of TG per gram of the meat, a change of yield of Test Plot 3 relative to the control is "7.88%", and a change of yield of Test Plot 2 relative to the control is "-0.89%", and therefore, in Test Plot 7 added with the same amounts of arginine and TG, a change of yield relative to the control should become theoretically "6.99%" (7.88% - 0.89%) that is the sum of these values. This value was defined as a theoretical value B. In addition, similarly, Test Plot 7 is considered to be a plot added with a half of 0.6% of arginine and a half of 0.76 U of TG per gram of the meat; and a change of yield of Test Plot 6 relative to the control is "14.15%", and a change of yield of Test Plot 5 relative to the control is "-2.63%". Therefore, in Test Plot 7 added with half amounts of arginine and TG, respectively, a change of yield relative to the control should become theoretically "5.76%" (14.15%/2 - 2.63%/2) that is the sum of halves of these values. This value was defined as a theoretical value A. It is meant that if the amount of change in an observed value relative to the control is equal to such a theoretical value, an effect in accordance with theory, namely an additive effect is revealed, whereas if the amount of change in an observed value relative to the control is larger than such a theoretical value, an effect exceeding the theory, namely a synergistic effect is revealed.

As shown in Tables 2 and 3, in all of the yield and the breaking strength, the amounts of change of Test Plots 4 and 7 using a combination of arginine and TG relative to the control (hatched portions in Tables 2 and 3) were a value larger than all of the theoretical value A and the theoretical value B (only the theoretical value A in Test Plot 4) . Accordingly, in all of the yield and the breaking strength, the effect due to the use of a combination of arginine and TG was elucidated to be a synergistic effect. From the above, it has become clear that the use of a combination of arginine and TG for processed meat foods is an excellent means for improving the yield and the food texture, an aspect of which has not been revealed so far.

**Table 2**

| Test Plot | | Yield (%) | | | |
|---|---|---|---|---|---|
| | | Observed value | Difference from the control | Theoretical Value A | Theoretical value B |
| 1 | Control | 79.66% | | | |
| 2 | TG (0.38U) | 78.77% | -0.89% | | |
| 3 | Arg (0.3%) | 87.54% | 7.88% | | |
| 4 | Arg (0.15%) + TG (0.19 U) | 84.31% | 4.65% | 3.50% | |
| 5 | TG (0.76 U) | 77.03% | -2.63% | | |
| 6 | Arg (0.6%) | 93.81% | 14.15% | | |
| 7 | Arg (0.3%) + TG (0.38%) | 87.41% | 7.75% | 5.76% | 6.99% |

**Table 3**

| Test Plot | | Breaking strength (g) | | | |
|---|---|---|---|---|---|
| | | Observed value | Difference from the control | Theoretical Value A | Theoretical value B |
| 1 | Control | 786.37 | | | |
| 2 | TG (0.38U) | 964.09 | 177.71 | | |
| 3 | Arg (0.3%) | 863.30 | 76.93 | | |
| 4 | Arg (0.15%) + TG (0.19 U) | 922.74 | 136.37 | 127.32 | |
| 5 | TG (0.76 U) | 1033.99 | 247.62 | | |
| 6 | Arg (0.6%) | 975.47 | 189.10 | | |
| 7 | Arg (0.3%) + TG (0.38%) | 1152.72 | 366.34 | 218.36 | 254.64 |

### Example 2 (Reference only)

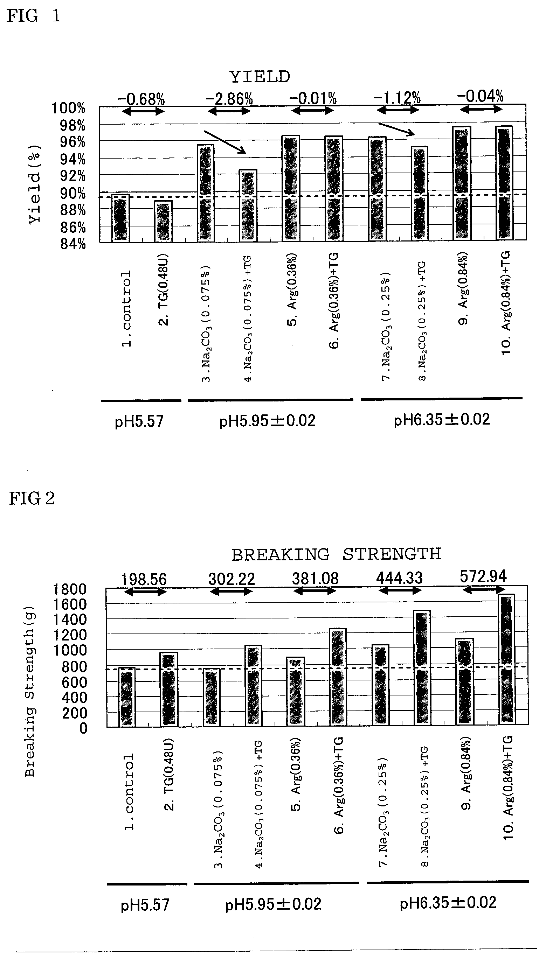

A solution obtained by previously dissolving each of additives shown in Table 4 in 10 g of distilled water was added to and mixed with 100 g of a meat in a paste form in the same method as that in Example 1, thereby preparing a pork gel. However, in addition to the method of Example 1, a pH of the water-added meat paste was measured before the injection into the casing tube. The same arginine and transglutaminase as those used in Example 1 were used, and "Purified Sodium Carbonate (Anhydrous)" (manufactured by Daito Chemical Co., Ltd.) was used as the sodium carbonate. Incidentally, there may be the case where sodium carbonate is abbreviated and expressed as Na carbonate. The measurement results of the yield and the breaking strength are shown in FIGs. 1 and 2. The addition amount of the arginine was shown in terms of % by weight relative to the meat raw material, the addition amount of TG was shown in terms of an addition unit (U) per gram of the meat raw material, and the addition amount of sodium carbonate was shown in terms of % by weight relative to the meat raw material.

As shown in FIG. 1, at the same pH of 5.95 ± 0.02, in Test Plot 4 using a combination of sodium carbonate and TG, a lowering of the yield by 2.86% was found, as compared with the sole addition of sodium carbonate in Test Plot 3; and in Test Plot 6 using a combination of arginine and TG, a lowering of the yield was not substantially found, as compared with the sole addition of arginine in Test Plot 5. In addition, even at a pH of 6.35 ± 0.02, exactly the same tendency was confirmed. In addition, with respect to the breaking strength, as shown in FIG. 2, at the same pH of 5.95 ± 0.02, in Test Plot 4 using a combination of sodium carbonate and TG, an increase of the breaking strength by 302.22 g was found, as compared with the sole addition of sodium carbonate in Test Plot 3; and in Test Plot 6 using a combination of arginine and TG, an increase of the breaking strength by even 381.08 g was found, as compared with the sole addition of arginine in Test Plot 5. In addition, even at a pH of 6.35 ± 0.02, exactly the same tendency was confirmed. From the above, it has been suggested that the synergistic effect by arginine and TG against the yield and the breaking strength is not brought due to an increase of the pH by arginine but is a peculiar effect to arginine.

**Table 4**

| Test Plot | 1 | 2 | 3 | 4 | 5 | 6 | 7 | 8 | 9 | 10 |
|---|---|---|---|---|---|---|---|---|---|---|
| Arg (g) | | | | | 0.36 | 0.36 | | | 0.84 | 0.84 |
| TG (U) | | 48 | | 48 | | 48 | | 48 | | 48 |
| Sodium carbonate (g) | | | 0.075 | 0.075 | | | 0.25 | 0.25 | | |

### Example 3 (Reference only)

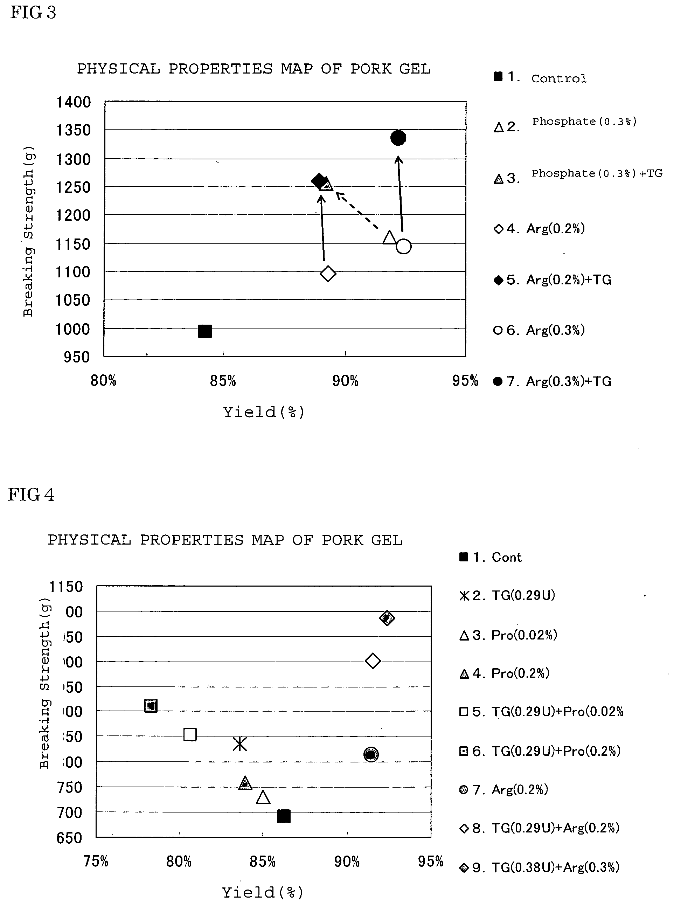

A solution obtained by previously dissolving each of additives shown in Table 5 in 10 g of distilled water was added to and mixed with 100 g of a meat in a paste form in the same method as that in Example 1, thereby preparing a pork gel. The same arginine and transglutaminase as those used in Example 1 were used, and "POLYGON" (manufactured by Chiyoda Industry Co. , Ltd.) was used as the phosphate. The measurement results of the breaking strength and the yield are shown in FIG. 3. Incidentally, the addition amount of the arginine was shown in terms of % by weight relative to the meat raw material, the addition amount of TG was shown in terms of an addition unit (U) per gram of the meat raw material, and the addition amount of the phosphate was shown in terms of % by weight relative to the meat raw material.

As shown in FIG. 3, in Test Plot 3 using a combination of the phosphate and TG, though the breaking strength increased, the yield was lowered, as compared with the sole addition of the phosphate in Test Plot 2; in Test Plot 7 using a combination of arginine and TG, the breaking strength largely increased, and a lowering of the yield was not substantially found, as compared with the sole addition of arginine in Test Plot 6 exhibiting substantially equal physical properties to those in Test Plot 2. In addition, by adding TG, the breaking strength increased, and a lowering of the yield was not substantially found, relative to the sole addition of arginine in Test Plot 4 in which the addition amount of arginine was different from that described above. From the above, it has been suggested that the synergistic effect due to the use a combination of arginine and TG is a peculiar effect to arginine, which cannot be obtained by the use of a combination of the phosphate and TG.

**Table 5**

| Test Plot | 1 | 2 | 3 | 4 | 5 | 6 | 7 |
|---|---|---|---|---|---|---|---|
| Arg (q) | | | | 0.2 | 0.2 | 0.3 | 0.3 |
| TG (U) | | | 38 | | 38 | | 38 |
| Phosphate (g) | | 0.3 | 0.3 | | | | |

### Example 4 (Reference only)

A solution obtained by previously dissolving each of additives shown in Table 6 in 10 g of distilled water was added to and mixed with 100 g of a meat in a paste form in the same method as that in Example 1, thereby preparing a pork gel. The same arginine and transglutaminase as those used in Example 1 were used, L-histidine, manufactured by Ajinomoto Co. , Inc. was used for the histidine (His), and L-lysine (manufactured by Wako Pure Chemical Industries, Ltd.) was used as the lysine (Lys). As for the obtained data of yield and breaking strength, the theoretical yield and breaking strength of a plot added with a combination of TG and arginine, histidine, or lysine were calculated and analyzed based on the results in a plot added with only TG and a plot added with only arginine, histidine, or lysine. For example, in the case of Test Plot 4 added with 0.003 g of arginine per gram of the meat and 0.38 U of TG per gram of the meat, the sum of a change of breaking strength of Test Plot 3 added with 0. 003 g of arginine per gram of the meat relative to the control and a change of breaking strength of Test Plot 2 added with 0.38 U of TG per gram of the meat relative to the control becomes a theoretical value of a change of breaking strength of Test Plot 4 relative to the control. It is meant that if the change of breaking strength in an observed value of Test Plot 4 relative to the control is equal to this theoretical value, an effect in accordance with theory, namely an additive effect is revealed, whereas if the change of breaking strength in an observed value of Test Plot 4 relative to the control is larger than the theoretical value, an effect exceeding the theory, namely a synergistic effect is revealed. By adopting the foregoing method, in the combined use test plots of Test Plots 4, 6 and 8, the synergistic effect regarding each of the yield and the breaking strength was analyzed.

**Table 6**

| Test Plot | 1 | 2 | 3 | 4 | 5 | 6 | 7 | 8 |
|---|---|---|---|---|---|---|---|---|
| TG (U) | | 38 | | 38 | | 38 | | 38 |
| Arg (g) | | | 0.3 | 0.3 | | | | |
| His (g) | | | | | 0.3 | 0.3 | | |
| Lys (g) | | | | | | | 0.3 | 0.3 |

As a result, as shown in Tables 7 and 8, amounts of increase in the yield and the breaking strength in Test Plot 4 using a combination of TG and arginine (hatched portions in Tables 7 and 8) relative to the control were values larger than the theoretical values. On the other hand, amounts of increase in the yield and the breaking strength in Test Plots 6 and 8 using a combination of TG and histidine or lysine (hatched portions in Tables 7 and 8) relative to the control were values smaller than the theoretical values. Accordingly, it has been suggested that the effect due to the use of a combination of TG and arginine is a synergistic effect and is a peculiar effect which is not obtained by the use of combination of TG and histidine or lysine.

**Table 7**

| Test Plot | | Yield (%) | | |
|---|---|---|---|---|
| | | Observed value | Difference from the control | Theoretical value |
| 1 | Control | 88.19% | | |
| 2 | TG (0.38 U) | 87.40% | -0.80% | |
| 3 | Arg (0.3%) | 94.48% | 6.29% | |
| 4 | Arg (0.3%) + TG (0.38 U) | 96.49% | 8.29% | 5.49% |
| 5 | His (0.3%) | 93.32% | 5.13% | |
| 6 | His (0.3%) + TG (0.38 U) | 92.44% | 4.24% | 4.33% |
| 7 | Lys (0.3%) | 93.58% | 5.39% | |
| 8 | Lys (0.3%) + TG (0.38 U) | 91.43% | 3.23% | 4.59% |

**Table 8**

| Test Plot | | Breaking strength (g) | | |
|---|---|---|---|---|
| | | Observed value | Difference from the control | Theoretical value |
| 1 | Control | 962.31 | | |
| 2 | TG (0.38 U) | 1084.89 | 122.58 | |
| 3 | Arg (0.3%) | 1071.82 | 109.52 | |
| 4 | Arg (0.3%) + TG (0.38 U) | 1328.28 | 365.98 | 232.10 |
| 5 | His (0.3%) | 1027.01 | 64.70 | |
| 6 | His (0.3%) + TG (0.38 U) | 1137.50 | 175.19 | 187.28 |
| 7 | Lys (0.3%) | 1050.23 | 87.92 | |
| 8 | Lys (0.3%) + TG (0.38 U) | 1161.50 | 199.19 | 210.50 |

### Example 5 (Reference only)

In order to confirm a multiplicity of uses of the modification effect due to the use of a combination of arginine and TG against processed meat foods, a variety of processed meat foods were made by way of trial.

After removing fat portions, a pork foreleg meat was minced using a 3 mm die, and lard was similarly minced using a 3 mm die. Respective raw materials were thrown into a silent cutter in a blending ratio shown in Table 9 and cut. When the temperature of the mixture reached 12°C, the mixture was taken out, degassed, and then packed in a collagen casing having a diameter of 17 mm. Thereafter, the resultant was dried and heated at 60°C for 30 minutes, smoked at 60°C for 10 minutes, boiled at 75°C for 30 minutes, and then cooled with running water for 10 minutes, thereby obtaining a sausage. Two test plots including a control plot and a plot added with a combination of arginine and TG were prepared, and these additives were thrown and mixed together with other raw materials. The addition amount of arginine was 0.42% relative to the meat, the addition amount of TG was 0.53 U per gram of the raw material meat, and the same arginine and TG as those used in Example 1 were used. Incidentally, the pork foreleg meat and the lard are collectively called a meat. The obtained sausage was heated with boiling water and then subjected to sensory evaluation. The sensory evaluation was performed by four panelists based on an evaluation point on whether or not the meat had a preferable food texture provided with a tender and chewy texture and a juicy texture. With respect to the evaluation point, as compared with the control, the case where the plot using a combination of arginine and TG was very excellent was designated as "A"; the case where the subject plot was excellent was designated as "B"; the case where the subject plot was slightly excellent was designated as "C"; and the case where the subject plot was equal to the control or inferior to the control was designated as "D".

**Table 9**

| Raw material name | Blending ratio (%) |
|---|---|
| Pork foreleg meat | 47 |
| Lard | 24 |
| Sodium nitrite | 0.2 |
| Salt | 1.5 |
| Sodium ascorbate | 0.09 |
| Granulated sugar | 1.3 |
| White pepper | 0.2 |
| "AJINOMOTO" (monosodium glutamate) | 0.2 |
| Ice | 25.49 |

After removing fat portions, a pork loin was minced using a 3 mm die, and a pickle solution which had been previously prepared according to a blend shown in Table 10 was added in an amount corresponding to 40% of the minced meat. That is, the system is in a state of 140% water addition. The contents were mixed at a speed of "1" for one minute and at a speed of "2" for 4 minutes using a mixer (manufactured by Hobart Corporation), degassed, and then packed in a fibrous casing having a lay flat width of 104 mm. Thereafter, the resultant was dried and heated at 55°C for 90 minutes, smoked at 65°C for 20 minutes, boiled at 75°C for 90 minutes, and then cooled with running water for 10 minutes, thereby obtaining a ham. Two test plots including a control plot and a plot added with a combination of arginine and TG were prepared, and these additives were added to and mixed with the meat raw materials together with the marinade liquid. The addition amount of arginine was 0.42% relative to the meat, the addition amount of TG was 0.53 U per gram of the raw material meat, and the same arginine and TG as those used in Example 1 were used. The obtained ham was sliced in a thickness of 1.2 mm and subjected to sensory evaluation. The sensory evaluation was performed by four panelists based on an evaluation point on whether or not the meat had a preferable food texture provided with a tender and chewy texture and a juicy texture. With respect to the evaluation point, as compared with the control, the case where the plot using a combination of arginine and TG was very excellent was designated as "A"; the case where the subject plot was excellent was designated as "B"; the case where the subject plot was slightly excellent was designated as "C"; and the case where the subject plot was equal to the control or inferior to the control was designated as "D".

**Table 10**

| Raw material name | Blending ratio (%) |
|---|---|
| Soybean protein | 2.5 |
| Egg white powder | 1 |
| Milk protein | 1 |
| Sodium caseinate | 0.5 |
| Salt | 4 |
| Sodium ascorbate | 0.1 |
| Sodium nitrite | 0.03 |
| Dextrin | 4.5 |
| Granulated sugar | 2.8 |
| "AJINOMOTO" (monosodium glutamate) | 0.3 |
| Water | 83.27 |

Raw materials were mixed according to a blend shown in Table 11 using a mixer (manufactured by Hobart Corporation). The mixed resultant was molded in an amount of 45 g for each and grilled at 180°C for 3 minutes. Thereafter, the resultant was turned over, grilled for 2 minutes, and cooled, followed by rapid freezing to obtain a frozen hamburger steak. Two test plots including a control plot and a plot added with a combination of arginine and TG were prepared, and these additives were thrown and mixed together with other raw materials. The addition amount of arginine was 0.5% relative to the meat, the addition amount of TG was 0.63 U per gram of the raw material meat, and the same arginine and TG as those used in Example 1 were used. The frozen hamburger steak was thawed at room temperature, warmed up by a microwave oven, and then subjected to sensory evaluation. The sensory evaluation was performed by four panelists based on an evaluation point on whether or not the meat had a preferable food texture provided with a granular texture of meat and a juicy texture. With respect to the evaluation point, as compared with the control, the case where the plot using a combination of arginine and TG was very excellent was designated as "A"; the case where the subject plot was excellent was designated as "B" ; the case where the subject plot was slightly excellent was designated as "C"; and the case where the subject plot was equal to the control or inferior to the control was designated as "D".

**Table 11**

| Raw material name | Blending ratio (%) |
|---|---|
| Mixture of minced pork and beef (beef/pork = 1/1) | 60 |
| Onion (cut into tiny pieces) | 20 |
| Lard | 6 |
| Egg white powder | 0.7 |
| Bread crumps | 6 |
| Caster sugar | 1 |
| Salt | 0.62 |
| Ginger powder | 0.03 |
| White pepper | 0.03 |
| Nutmeg | 0.02 |
| "AJINOMOTO" (monosodium glutamate) | 0.3 |
| Water | 5.3 |

After removing fat portions, a pork thigh meat was minced using a 3 mm die, and lard was similarly minced using a 3 mm die. Respective raw materials were thrown into a mixer (manufactured by Hobart Corporation) and mixed according to a blend shown in Table 12. When the temperature of the mixture reached 12°C, the mixture was taken out and molded. The molded product was set at 50°C for 30 minutes, heated at 95°C for 8 minutes, and then cooled, followed by rapid freezing to obtain frozen meatballs. Two test plots including a control plot and a plot added with a combination of arginine and TG were prepared, and these additives were thrown and mixed together with other raw materials. The addition amount of arginine was 0.44% relative to the meat, the addition amount of TG was 0.56 U per gram of the raw material meat, and the same arginine and TG as those used in Example 1 were used. Incidentally, the pork thigh meat and the lard are collectively called a meat. The frozen meatballs were thawed at room temperature, warmed up by a microwave oven, and then subjected to sensory evaluation. The sensory evaluation was performed by four panelists based on an evaluation point on whether or not the meat had a preferable food texture provided with a granular texture of meat and a juicy texture. With respect to the evaluation point, as compared with the control, the case where the plot using a combination of arginine and TG was very excellent was designated as "A"; the case where the subject plot was excellent was designated as "B"; the case where the subject plot was slightly excellent was designated as "C"; and the case where the subject plot was equal to the control or inferior to the control was designated as "D".

**Table 12**

| Raw material name | Blending ratio (%) |
|---|---|
| Pork thigh meat | 60 |
| Lard | 8 |
| Tapioca processed starch | 7.5 |
| Salt | 2.7 |
| Caster sugar | 2.9 |
| "AJINOMOTO" (monosodium glutamate) | 2 |
| Onion (cut into tiny pieces) | 5.8 |
| White pepper | 0.2 |
| Ice | 10.9 |

After removing skin and fat portions, a chicken thigh meat was cut into pieces of from 25 to 30 g, and 150 g of water was thrown into 500 g of the cut meat and penetrated into the meat. That is, the system is in a state of 130% water addition. The method of penetrating water into the meat was carried out by two ways. The first way is a method of marinating the meat for 3 hours as it was, and the second way is a method of tumbling the meat for 3 hours using a tumbler. The meat treated by each of these methods was made to drain water with a perforated basket for 5 minutes, dredged in wheat flour, and then fried at 165°C for 4 minutes, thereby obtaining a fried chicken. In each of the marinating method and the tumbling method, two test plots including a control plot and a plot added with a combination of arginine and TG were prepared, and these additives were dissolved in water in advance. The addition amount of arginine was 0.3% relative to the meat, the addition amount of TG was 0.38 U per gram of the raw material meat, and the same arginine and TG as those used in Example 1 were used. The obtained fried chicken was subjected to sensory evaluation. The sensory evaluation was performed by four panelists based on an evaluation point on whether or not the meat had a preferable food texture provided with tenderness, a juicy texture, and a natural fibrous texture. With respect to the evaluation point, as compared with the control, the case where the plot using a combination of arginine and TG was very excellent was designated as "A"; the case where the subject plot was excellent was designated as "B"; the case where the subject plot was slightly excellent was designated as "C"; and the case where the subject plot was equal to the control or inferior to the control was designated as "D".

After removing fat portions, a pork loin was sliced in a thickness of 8 mm, and 150 g of water was thrown into 500 g of the sliced meat and penetrated into the meat. That is, the system is in a state of 130% water addition. The method of penetrating water into the meat was carried out by two ways. The first way is a method of marinating the meat for 3 hours as it was, and the second way is a method of tumbling the meat for 3 hours using a tumbler. The meat treated by each of these methods was made to drain water with a perforated basket for 5 minutes, dredged in wheat flour, dipped into an egg liquid, covered with bread crumbs, and then fried at 170°C for 4 minutes, thereby obtaining a fried pork cutlet. In each of the marinating method and the tumbling method, two test plots including a control plot and a plot added with a combination of arginine and TG were prepared, and these additives were dissolved in water in advance. The addition amount of arginine was 0.3% relative to the meat, the addition amount of TG was 0.38 U per gram of the raw material meat, and the same arginine and TG as those used in Example 1 were used. The obtained fried pork cutlet was subjected to sensory evaluation. The sensory evaluation was performed by four panelists based on an evaluation point on whether or not the meat had a preferable food texture provided with tenderness, a juicy texture, and a natural fibrous texture. With respect to the evaluation point, as compared with the control, the case where the plot using a combination of arginine and TG was very excellent was designated as "A"; the case where the subject plot was excellent was designated as "B"; the case where the subject plot was slightly excellent was designated as "C"; and the case where the subject plot was equal to the control or inferior to the control was designated as "D".

After removing fat portions, a beef rib was sliced in a thickness of 2 mm, and 500 g of the sliced meat was marinated with 150 g of water for 3 hours, thereby penetrating water into the meat. That is, the system is in a state of 130% water addition. The marinated meat was made to drain water with a perforated basket for 5 minutes and then grilled at 180°C for 5 minutes using a hot plate, thereby obtaining a grilled meat. Two test plots including a control plot and a plot added with a combination of arginine and TG were prepared, and these additives were dissolved in water in advance. The addition amount of arginine was 0.3% relative to the meat, the addition amount of TG was 0.38 U per gram of the raw material meat, and the same arginine and TG as those used in Example 1 were used. The obtained grilled meat was subjected to sensory evaluation. The sensory evaluation was performed by four panelists based on an evaluation point on whether or not the meat had a preferable food texture provided with tenderness, a juicy texture, and a natural fibrous texture. With respect to the evaluation point, as compared with the control, the case where the plot using a combination of arginine and TG was very excellent was designated as "A"; the case where the subject plot was excellent was designated as "B"; the case where the subject plot was slightly excellent was designated as "C"; and the case where the subject plot was equal to the control or inferior to the control was designated as "D".

After removing fat portions, a pork rib was sliced in a weight of from 130 to 140 g and mixed with a seasoning liquid in an amount of 1. 7 times the sliced meat, followed by sealing in a pouch. The seasoning liquid was prepared according to a blend shown in Table 13. The resultant was allowed to stand at room temperature for 60 minutes and then boiled with boiling water for 60 minutes, thereby obtaining Dong Po Rou. Two test plots including a control plot and a plot added with a combination of arginine and TG were prepared, and these additives were dissolved in the seasoning liquid in advance. The addition amount of arginine was 0.3% relative to the meat, the addition amount of TG was 0.38 U per gram of the raw material meat, and the same arginine and TG as those used in Example 1 were used. The obtained grilled meat was subjected to sensory evaluation. The sensory evaluation was performed by four panelists based on an evaluation point on whether or not the meat had a preferable food texture provided with tenderness, a juicy texture, and a natural fibrous texture. With respect to the evaluation point, as compared with the control, the case where the plot using a combination of arginine and TG was very excellent was designated as "A"; the case where the subject plot was excellent was designated as "B"; the case where the subject plot was slightly excellent was designated as "C"; and the case where the subject plot was equal to the control or inferior to the control was designated as "D".

**Table 13**

| Raw material name | Blending ratio (%) |
|---|---|
| Dark soy sauce | 15.4 |
| Granulated sugar | 7.7 |
| Water | 76.9 |

After removing fat portions, a pork rib was added with a pickle solution which had been previously prepared according to a blend shown in Table 14 in an amount corresponding to 30% of the meat. That is, the system is in a state of 130% water addition. The meat was subjected to tumbling at 5°C overnight and then made to drain the liquid. The meat was dried and heated at 75°C for 40 minutes, dried and heated at 80°C for 40 minutes, and then steam cooked at 95°C for 15 minutes. The resulting meat was cooled in a refrigerator and then sliced to obtain a roast pork. Two test plots including a control plot and a plot added with a combination of arginine and TG were prepared, and these additives were dissolved in the pickle solution in advance. The addition amount of arginine was 0.3% relative to the meat, the addition amount of TG was 0.38 U per gram of the raw material meat, and the same arginine and TG as those used in Example 1 were used. The obtained roast pork was subjected to sensory evaluation. The sensory evaluation was performed by four panelists based on an evaluation point on whether or not the meat had a preferable food texture provided with tenderness, a juicy texture, and a natural fibrous texture. With respect to the evaluation point, as compared with the control, the case where the plot using a combination of arginine and TG was very excellent was designated as "A"; the case where the subject plot was excellent was designated as "B"; the case where the subject plot was slightly excellent was designated as "C"; and the case where the subject plot was equal to the control or inferior to the control was designated as "D". The evaluation results are shown in Table 15.

**Table 14**

| Raw material name | Blending ratio (%) |
|---|---|
| Salt | 6.8 |
| Granulated sugar | 13.5 |
| Ginger powder | 0.2 |
| Onion extract powder | 0.2 |
| "AJINOMOTO" (monosodium glutamate) | 0.9 |
| Soy sauce powder | 1.6 |
| Water | 76.8 |

As shown in Table 15, it has become clear that in all of the food systems, by using a combination of arginine and TG, an excellent food texture relative to the control is revealed. Above all, the effect in the food system using a minced meat was especially excellent. In addition, while not shown in the table, by using a combination of arginine and TG, "juiciness keeping texture" and "meatfulness" were imparted in the food system using a minced meat. These are a novel effect which cannot be imparted by the sole addition of arginine or TG. Incidentally, the "juiciness keeping texture" is different from a "sizzled texture" in which a meat juice overflows at the time of cutting a hamburger steak or the like, and is a texture in which a meat juice bleeds out first at the time of chewing, and the sizzled texture and the juiciness keeping texture are collectively named a juicy texture. In addition, the "meatfulness" is the presence of a meat itself such that a fibrous texture is properly felt in the respective meat particles while keeping a granular texture of meat, and it may be said to be a new technology that this food texture can be imparted in the system using a minced meat. From the foregoing results, it has been demonstrated that the present invention using a combination of arginine and TG for processed meat foods is able to be used for general purposes.

**Table 15**

| | | Arg + TG | Evaluation point |
|---|---|---|---|
| Finely minced system | Sausage | A | Had a tender and chewy texture and a juicy texture. |
| | Model ham | A | |
| Coarsely minced system | Hamburger steak | A | Had a granular texture of meat and a juicy texture |
| | Meatball | A | |
| Single slice meat system | Fried chicken (marinated) | B | |
| | Fried chicken (tumbled) | B | |
| | Fried pork cutlet (marinated) | B | Had tenderness, a juicy texture, and a natural fibrous texture |
| | Fried pork cullet (tumbled) | B | |
| | Grilled meat | B | |
| | Dong Po Rou | B | |
| | Roast pork | B | |

### Example 6

After removing fat portions, a pork inside thigh meat (domestically produced single slice meat) was cut into small pieces of about 2 cm cube, which were then minced by a mincer with a 3 mm die, "GREAT MINCE WMG-22" (manufactured by Watanabe Foodmach Co., Ltd.). Thereafter, salt in an amount corresponding to 1% relative to the meat was added, and the resulting meat was further allowed to pass through the foregoing mince thrice, thereby obtaining a meat in a paste form. The obtained meat in a paste form was divided into test plots each having a weight of 100 g, and a solution obtained by previously dissolving each of additives shown in Table 16 in 10 g of distilled water was added to and mixed with 100 g of the meat in a paste form. That is, the system is in a state of 110% water addition relative to the meat. L-Arginine, manufactured by Ajinomoto Co. , Inc. was used as the arginine; "ACTIVA" TG (manufactured by Aj inomoto Co. , Inc.) was used as the transglutaminase; calcium chloride dihydrate, manufactured by Tomita Pharmaceutical Co., Ltd. was used as the calcium chloride; and magnesium chloride hexahydrate, manufactured by Tomita Pharmaceutical Co., Ltd. was used as the magnesium chloride. Incidentally, there may be the case where these are abbreviated and expressed as Arg, TG, CaCl₂, and MgCl₂, respectively.

**Table 16**

| | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| Arg (g) | | 0.36 | 0.84 | | | | | | 0.36 | 0.36 | 0.84 | 0.36 | 0.36 | 0.84 |
| TG (U) | | | | 48 | | | | | 48 | 48 | 48 | 48 | 48 | 48 |
| CaCl₂ (g) | | | | | 0.2 | 0.5 | | | 0.2 | 0.5 | 0.5 | | | |
| MgCl₂ (g) | | | | | | | 0.2 | 0.5 | | | | 0.2 | 0.5 | 0.5 |

The meat in a paste form having been added with water by the additive solution was degassed and then packed in a plastic-made casing tube, "KUREHARON FILM" (47 mm x 270 mm) (manufactured by Kureha corporation), followed by clipping by a clipper. The meat packed in the casing tube was allowed to stand at 5°C for one hour and then heated at 55°C for one hour and at 75°C for one hour using a programmed incubator, "THERMO-HYGROSTAT CHAMBER LH21-13P" (manufactured by Nagano Science Co., Ltd.), thereby obtaining a heated gel of pork. The obtained heated gel was named a pork gel. The pork gel was stored at 5°C for 12 hours and then allowed to stand at room temperature for one hour. The casing of the pork gel was opened, and the moisture attached onto the surface of the pork gel was wiped off by a paper towel. Thereafter, the pork gel was cut into a width of 2 cm, and five cylindrical pork gel pieces were obtained from one pork gel. The 2 cm-wide cylindrical pork gel piece was set in the direction into which a plunger was inserted relative to the curved surface and submitted to a texture analyzer, "TA.XT.plus" (manufactured by Stable Micro Systems). The plunger used a stainless steel-made sphere having a diameter of 7 mm, and a test speed was set at 1 mm/sec. A load at the breaking point was defined as the breaking strength (unit: g), and an average value of five data in each of the test plots was determined and defined as an observed value of the breaking strength. The results are shown in Table 17. Incidentally, the addition amount of each of the arginine, the calcium chloride, and the magnesium chloride was shown in terms of % by weight relative to the meat raw material, and the addition amount of TG was shown in terms of an addition unit (U) per gram of the meat raw material.

**Table 17**

| Test Plot | Breaking strength (g) | | |
|---|---|---|---|
| | Observed value | Difference from the control | Theoretical value |
| 1. Control | 883.90 | | |
| 2. Arg (0.36%) | 944.35 | 60.45 | |
| 3. Arg (0.84%) | 995.63 | 111.74 | |
| 4. TG (0.48 U) | 985.76 | 101.86 | |
| 5. CaCl₂ (0.2%) | 887.27 | 3.38 | |
| 6. CaCl₂ (0.5%) | 926.78 | 42.89 | |
| 7. MgCl₂ (0.2%) | 886.35 | 2.45 | |
| 8. MgCl₂ (0.5%) | 906.79 | 22.90 | |
| 9. Arg (0.36%) + TG + CaCl₂ (0.2%) | 1057.42 | 173.52 | 165.69 |
| 10. Arg (0.36%) + TG + CaCl₂ (0.5%) | 1152.40 | 268.51 | 205.20 |
| 11. Arg (0.84%) + TG + CaCl₂ (0.5%) | 1645.60 | 761.71 | 256.48 |
| 12. Arg (0.36%) + TG + MgCl₂ (0.2%) | 1094.08 | 210.18 | 164.76 |
| 13. Arg (0.36%) + TG + MgCl₂ (0.5%) | 1169.98 | 286.08 | 185.21 |
| 14. Arg (0.84%) + TG + MgCl₂ (0.5%) | 1788.89 | 904.99 | 236.49 |

In addition, the theoretical breaking strength of a plot added with a combination of TG, arginine, and calcium chloride or potassium chloride was calculated and analyzed based on the results in plots added with only one of them. For example, in the case of Test Plot 9 added with 0.36% of arginine, 0.48 U of TG per gram of the raw material meat, and 0.2% of calcium chloride, a change of breaking strength of Test Plot 2 relative to the control is "60.45 g", a change of breaking strength of Test Plot 4 relative to the control is "101.86 g", and a change of breaking strength of Test Plot 5 relative to the control is "3.38 g", and therefore, in Test Plot 9 added with the same amounts of these materials, a change of breaking strength relative to the control should become theoretically "165.69 g" (60.45 g + 101. 86 g + 3.38 g) that is the sum of these values. This value was defined as a theoretical value. It is meant that if the amount of change in an observed value relative to the control is equal to such a theoretical value, an effect in accordance with theory, namely an additive effect is revealed, whereas if the amount of change in an observed value relative to the control is larger than such a theoretical value, an effect exceeding the theory, namely a synergistic effect is revealed.

As shown in Table 17, amounts of increase in the breaking strength in Test Plots 9 to 14 using a combination of arginine, TG, and calcium chloride or magnesium chloride (hatched portions in Table 17) relative to the control were values larger than the theoretical values. Accordingly, it has been shown that the effect on the breaking strength due to the use of a combination of arginine, TG, and calcium chloride or magnesium chloride is a synergistic effect. From the above, is has become clear that the use of a combination of arginine or its salt, TG, and a calcium salt or a magnesium salt for processed meat foods is a means for modifying the food texture, an aspect of which has not been revealed so far.

### Example 7

A pork foreleg meat obtained by removing fat portions and cutting in a dice shape of 2 cm cube and a similarly cut lard were blended according to a blend shown in Table 18, and were minced using a 5 mm die. The minced pork foreleg meat and lard, a chicken, salt, a polyphosphate, sodium ascorbate, and a 10% sodium nitrite preparation were mixed for 4 minutes according to the blend shown in Table 18 by using a kneader, and the resultant mixture was allowed to stand at 5°C overnight. Tapioca starch, soybean protein, granulated sugar, "AJINOMOTO", white pepper, and water were added to the mixture according to the blend shown in Table 18, and the contents were mixed for 4 minutes by using a kneader. Various additives were added to the obtained mixture according to a blend shown in Table 19, and the contents were mixed for one minute by a mixer (manufactured by Hobart Corporation) and then packed in a collagen casing having a diameter of 21 mm. Thereafter, the resultant was dried and heated at 60°C for 30 minutes, smoked at 65°C for 10 minutes, and boiled at 75°C for 30 minutes, thereby obtaining a coarsely minced sausage. Test plots shown in Table 19 were prepared, and the same arginine, TG, and calcium chloride as those used in Example 1 were used. The addition amounts of arginine and calcium chloride were shown in terms of % by weight relative to the meat raw material, and the addition amount of TG was shown in terms of an addition unit (U) per gram of the meat raw material. Incidentally, the pork foreleg meat, the lard, and the chicken are collectively named a meat. The obtained sausage was heated with boiling water and then subjected to sensory evaluation. The sensory evaluation was performed by four panelists based on an evaluation point on whether or not the meat had a preferable food texture provided with hardness, flexibleness, and a granular texture of meat. With respect to the evaluation point, as compared with the control, the case where the plot was very excellent was designated as "A"; the case where the plot was excellent was designated as "B"; the case where the plot was slightly excellent was designated as "C"; and the case where the plot was equal to the control or inferior to the control was designated as "D". The results are shown in Table 20.

As shown in Table 20, it has become clear that by using a combination of arginine, TG, and calcium chloride, a preferable food texture provided with hardness, flexibleness, and a granular texture of meat is revealed as compared with the control.

**Table 18**

| Raw material name | Blending ratio (%) |
|---|---|
| Pork foreleg meat | 22.5 |
| Lard | 12.5 |
| Chicken (smashed product) | 15 |
| Tapioca starch | 7 |
| Soybean protein | 3 |
| Salt | 1.2 |
| Polyphosphate | 0.3 |
| Sodium ascorbate | 0.1 |
| 10% sodium nitrite-containing preparation | 0.2 |
| Granulated sugar | 0.5 |
| "AJINOMOTO" (monosodium glutamate) | 0.2 |
| White pepper | 0.1 |
| Water | 37.4 |

**Table 19**

| | 1 | 2 | 3 | 4 |
|---|---|---|---|---|
| Arg (% relative to the meat) | | 0.02 | 0.01 | 0.05 |
| TG (U/g-meat) | | 0.08 | 0.06 | 0.01 |
| CaCl₂ (% relative to the meat) | | 0.1 | 0.2 | 0.2 |

**Table 20**

| Test Plot | Sensory evaluation results |
|---|---|
| 1. Control | - |
| 2. Arg (0.02%) + TG (0.08 U) + CaCl₂ (0.1%) | B |
| 3. Arg (0.01 %) + TG (0.06 U) + CaCl₂ (0.2%) | A |
| 4. Arg (0.05%) + TG (0.01 U) + CaCl₂ (0.2%) | B |

### Example 8

In order to confirm a multiplicity of uses of the modification effect due to the use of a combination of arginine, TG, and a calcium salt or a magnesium salt against processed meat foods, a variety of processed meat foods were made by way of trial.

After removing fat portions, a pork foreleg meat was minced using a 3 mm die, and lard was similarly minced using a 3 mm die. Respective raw materials were thrown into a silent cutter in a blending ratio shown in Table 9 and cut. When the temperature of the mixture reached 12°C, the mixture was taken out, degassed, and then packed in a collagen casing having a diameter of 17 mm. Thereafter, the resultant was dried and heated at 60°C for 30 minutes, smoked at 60°C for 10 minutes, boiled at 75°C for 30 minutes, and then cooled with running water for 10 minutes, thereby obtaining a sausage. Three test plots including a control plot, a plot added with a combination of arginine, TG, and calcium chloride, and a plot added with a combination of arginine, TG, and magnesium chloride were prepared, and these additives were thrown and mixed together with other raw materials. The addition amount of arginine was 0.3% relative to the meat, the addition amount of TG was 0.35 U per gram of the raw material meat, the addition amount of calcium chloride was 0.3% relative to the meat, and the addition amount of magnesium chloride was 0.3% relative to the meat. The same arginine, TG, calcium chloride, and magnesium chloride as those used in Example 1 were used. Incidentally, the pork foreleg meat and the lard are collectively called a meat. The obtained sausage was heated with boiling water and then subjected to sensory evaluation. The sensory evaluation was performed by four panelists based on an evaluation point on whether or not the meat had a preferable food texture provided with a tender and chewy texture and a juicy texture. With respect to the evaluation point, as compared with the control, the case where the plot using a combination of arginine, TG, and calcium chloride or magnesium chloride was very excellent was designated as "A"; the case where the subject plot was excellent was designated as "B"; the case where the subject plot was slightly excellent was designated as "C"; and the case where the subject plot was equal to the control or inferior to the control was designated as "D".

After removing fat portions, a pork loin was minced using a 3 mm die, and a pickle solution which had been previously prepared according to a blend shown in Table 10 was added in an amount corresponding to 40% of the minced meat. That is, the system is in a state of 140% water addition. The contents were mixed at a speed of "1" for one minute and at a speed of "2" for 4 minutes using a mixer (manufactured by Hobart Corporation), degassed, and then packed in a fibrous casing having a lay flat width of 104 mm. Thereafter, the resultant was dried and heated at 55°C for 90 minutes, smoked at 65°C for 20 minutes, boiled at 75°C for 90 minutes, and then cooled with running water for 10 minutes, thereby obtaining a ham. Three test plots including a control plot, a plot added with a combination of arginine, TG, and calcium chloride, and a plot added with a combination of arginine, TG, and magnesium chloride were prepared, and these additives were added to and mixed with the meat raw materials together with the pickle solution. The addition amount of arginine was 0.42% relative to the meat, the addition amount of TG was 0.48 U per gram of the raw material meat, the addition amount of calcium chloride was 0.42% relative to the meat, and the addition amount of magnesium chloride was 0.42% relative to the meat. The same arginine, TG, calcium chloride, and magnesium chloride as those used in Example 1 were used. The obtained ham was sliced in a thickness of 1.2 mm and subjected to sensory evaluation. The sensory evaluation was performed by four panelists based on an evaluation point on whether or not the meat had a preferable food texture provided with a tender and chewy texture and a juicy texture. With respect to the evaluation point, as compared with the control, the case where the plot using a combination of arginine, TG, and calcium chloride or magnesium chloride was very excellent was designated as "A"; the case where the subject plot was excellent was designated as "B"; the case where the subject plot was slightly excellent was designated as "C" ; and the case where the subject plot was equal to the control or inferior to the control was designated as "D".

Raw materials were mixed according to a blend shown in Table 11 using a mixer (manufactured by Hobart Corporation). The resultant mixture was molded in an amount of 45 g for each and grilled at 180°C for 3 minutes. Thereafter, the resultant was turned over, grilled for 2 minutes, and cooled, followed by rapid freezing to obtain a frozen hamburger steak. Three test plots including a control plot, a plot added with a combination of arginine, TG, and calcium chloride, and a plot added with a combination of arginine, TG, and magnesium chloride were prepared, and these additives were thrown and mixed together with other raw materials. The addition amount of arginine was 0.5% relative to the meat, the addition amount of TG was 0.58 U per gram of the raw material meat, the addition amount of calcium chloride was 0.5% relative to the meat, and the addition amount of magnesium chloride was 0.5% relative to the meat. The same arginine, TG, calcium chloride, and magnesium chloride as those used in Example 1 were used. The frozen hamburger steak was thawed at room temperature, warmed up by a microwave oven, and then subj ected to sensory evaluation. The sensory evaluation was performed based on an evaluation point on whether or not the meat had a preferable food texture provided with a granular texture of meat and a juicy texture. With respect to the evaluation point, as compared with the control, the case where the plot using a combination of arginine, TG, and calcium chloride or magnesium chloride was very excellent was designated as "A"; the case where the subject plot was excellent was designated as "B"; the case where the subject plot was slightly excellent was designated as "C"; and the case where the subject plot was equal to the control or inferior to the control was designated as "D".

After removing fat portions, a pork thigh meat was minced using a 3 mm die, and lard was similarly minced using a 3 mm die. Respective raw materials were thrown into a mixer (manufactured by Hobart Corporation) and mixed according to a blend shown in Table 12. When the temperature of the mixture reached 12°C, the mixture was taken out and molded. The molded product was set at 50°C for 30 minutes, heated at 95°C for 8 minutes, and then cooled, followed by rapid freezing to obtain frozen meatballs. Three test plots including a control plot, a plot added with a combination of arginine, TG, and calcium chloride, and a plot added with a combination of arginine, TG, and magnesium chloride were prepared, and these additives were thrown and mixed together with other raw materials. The addition amount of arginine was 0.44% relative to the meat, the addition amount of TG was 0. 51 U per gram of the raw material meat, the addition amount of calcium chloride was 0.44% relative to the meat, and the addition amount of magnesium chloride was 0.44% relative to the meat. The same arginine, TG, calcium chloride, and magnesium chloride as those used in Example 1 were used. Incidentally, the pork thigh meat and the lard are collectively called a meat. The frozen meatballs were thawed at room temperature, warmed up by a microwave oven, and then subjected to sensory evaluation. The sensory evaluation was performed by four panelists based on an evaluation point on whether or not the meat had a preferable food texture provided with a granular texture of meat and a juicy texture. With respect to the evaluation point, as compared with the control, the case where the plot using a combination of arginine, TG, and calcium chloride or magnesium chloride was very excellent was designated as "A"; the case where the subject plot was excellent was designated as "B"; the case where the subject plot was slightly excellent was designated as "C"; and the case where the subject plot was equal to the control or inferior to the control was designated as "D".

After removing skin and fat portions, a chicken thigh meat was cut into pieces of from 25 to 30 g, and 150 g of water was thrown into 500 g of the cut meat and penetrated into the meat. That is, the system is in a state of 130% water addition. The method of penetrating water into the meat was carried out by two ways. The first way is a method of marinating the meat for 3 hours as it was, and the second way is a method of tumbling the meat for 3 hours using a tumbler. The meat treated by each of these methods was made to drain water with a perforated basket for 5 minutes, dredged in wheat flour, and then fried at 165°C for 4 minutes, thereby obtaining a fried chicken. In each of the marinating method and the tumbling method, three test plots including a control plot, a plot added with a combination of arginine, TG, and calcium chloride, and a plot added with a combination of arginine, TG, and magnesium chloride were prepared, and these additives were dissolved in water in advance. The addition amount of arginine was 0.3% relative to the meat, the addition amount of TG was 0.35 U per gram of the raw material meat, the addition amount of calcium chloride was 0.3% relative to the meat, and the addition amount of magnesium chloride was 0.3% relative to the meat. The same arginine, TG, calcium chloride, and magnesium chloride as those used in Example 1 were used. The obtained fried chicken was subjected to sensory evaluation. The sensory evaluation was performed by four panelists based on an evaluation point on whether or not the meat had a preferable food texture provided with tenderness, a juicy texture, and a natural fibrous texture. With respect to the evaluation point, as compared with the control, the case where the plot using a combination of arginine, TG, and calcium chloride or magnesium chloride was very excellent was designated as "A"; the case where the subject plot was excellent was designated as "B"; the case where the subject plot was slightly excellent was designated as "C" ; and the case where the subject plot was equal to the control or inferior to the control was designated as "D".

After removing fat portions, a pork loin was sliced in a thickness of 8 mm, and 150 g of water was thrown into 500 g of the sliced meat and penetrated into the meat. That is, the system is in a state of 130% water addition. The method of penetrating water into the meat was carried out by two ways. The first way is a method of marinating the meat for 3 hours as it was, and the second way is a method of tumbling the meat for 3 hours using a tumbler. The meat treated by each of these methods was made to drain water with a perforated basket for 5 minutes, dredged in wheat flour, dipped into an egg liquid, covered with bread crumbs, and then fried at 170°C for 4 minutes, thereby obtaining a fried pork cutlet. In each of the marinating method and the tumbling method, three test plots including a control plot, a plot added with a combination of arginine, TG, and calcium chloride, and a plot added with a combination of arginine, TG, and magnesium chloride were prepared, and these additives were dissolved in water in advance. The addition amount of arginine was 0.3% relative to the meat, the addition amount of TG was 0.35 U per gram of the raw material meat, the addition amount of calcium chloride was 0.3% relative to the meat, and the addition amount of magnesium chloride was 0.3% relative to the meat. The same arginine, TG, calcium chloride, and magnesium chloride as those used in Example 1 were used. The obtained fried pork cutlet was subjected to sensory evaluation. The sensory evaluation was performed by four panelists based on an evaluation point on whether or not the meat had a preferable food texture provided with tenderness, a juicy texture, and a natural fibrous texture. With respect to the evaluation point, as compared with the control, the case where the plot using a combination of arginine, TG, and calcium chloride or magnesium chloride was very excellent was designated as "A"; the case where the subject plot was excellent was designated as "B"; the case where the subject plot was slightly excellent was designated as "C"; and the case where the subject plot was equal to the control or inferior to the control was designated as "D".

After removing fat portions, a beef rib was sliced in a thickness of 2 mm, and 500 g of the sliced meat was marinated with 150 g of water for 3 hours, thereby penetrating water into the meat. That is, the system is in a state of 130% water addition. The marinated meat was made to drain water with a perforated basket for 5 minutes and then grilled at 180°C for 5 minutes using a hot plate, thereby obtaining a grilled meat. Three test plots including a control plot, a plot added with a combination of arginine, TG, and calcium chloride, and a plot added with a combination of arginine, TG, and magnesium chloride were prepared, and these additives were dissolved in water in advance. The addition amount of arginine was 0.3% relative to the meat, the addition amount of TG was 0.35 U per gram of the raw material meat, the addition amount of calcium chloride was 0.3% relative to the meat, and the addition amount of magnesium chloride was 0.3% relative to the meat. The same arginine, TG, calcium chloride, and magnesium chloride as those used in Example 1 were used. The obtained grilled meat was subjected to sensory evaluation. The sensory evaluation was performed by four panelists based on an evaluation point on whether or not the meat had a preferable food texture provided with tenderness, a juicy texture, and a natural fibrous texture. With respect to the evaluation point, as compared with the control, the case where the plot using a combination of arginine, TG, and calcium chloride or magnesium chloride was very excellent was designated as "A"; the case where the subject plot was excellent was designated as "B"; the case where the subject plot was slightly excellent was designated as "C"; and the case where the subject plot was equal to the control or inferior to the control was designated as "D".

After removing fat portions, a pork rib was sliced in a weight of from 130 to 140 g and mixed with a seasoning liquid in an amount of 1. 7 times the sliced meat, followed by sealing in a pouch. The seasoning liquid was prepared according to a blend shown in Table 13. The resultant was allowed to stand at room temperature for 60 minutes and then boiled with boiling water for 60 minutes, thereby obtaining Dong Po Rou. Three test plots including a control plot, a plot added with a combination of arginine, TG, and calcium chloride, and a plot added with a combination of arginine, TG, and magnesium chloride were prepared, and these additives were dissolved in the seasoning liquid in advance. The addition amount of arginine was 0.3% relative to the meat, the addition amount of TG was 0.35 U per gram of the raw material meat, the addition amount of calcium chloride was 0.3% relative to the meat, and the addition amount of magnesium chloride was 0.3% relative to the meat. The same arginine, TG, calcium chloride, and magnesium chloride as those used in Example 1 were used. The obtained Dong Po Rou was subjected to sensory evaluation. The sensory evaluation was performed by four panelists based on an evaluation point on whether or not the meat had a preferable food texture provided with tenderness, a juicy texture, and a natural fibrous texture. With respect to the evaluation point, as compared with the control, the case where the plot using a combination of arginine, TG, and calcium chloride or magnesium chloride was very excellent was designated as "A"; the case where the subject plot was excellent was designated as "B"; the case where the subject plot was slightly excellent was designated as "C"; and the case where the subject plot was equal to the control or inferior to the control was designated as "D".

After removing fat portions, a pork rib was added with a pickle solution which had been previously prepared according to a blend shown in Table 14 in an amount corresponding to 30% of the meat. That is, the system is in a state of 130% water addition. The meat was subjected to tumbling at 5°C overnight and then made to drain the liquid. The meat was dried and heated at 75°C for 40 minutes, dried and heated at 80°C for 40 minutes, and then steam cooked at 95°C for 15 minutes. The resulting meat was cooled in a refrigerator and then sliced to obtain a roast pork. Three test plots including a control plot, a plot added with a combination of arginine, TG, and calcium chloride, and a plot added with a combination of arginine, TG, and magnesium chloride were prepared, and these additives were dissolved in the pickle solution in advance. The addition amount of arginine was 0.3% relative to the meat, the addition amount of TG was 0.35 U per gram of the raw material meat, the addition amount of calcium chloride was 0.3% relative to the meat, and the addition amount of magnesium chloride was 0.3% relative to the meat. The same arginine, TG, calcium chloride, and magnesium chloride as those used in Example 1 were used. The obtained roast pork was subjected to sensory evaluation. The sensory evaluation was performed by four panelists based on an evaluation point on whether or not the meat had a preferable food texture provided with tenderness, a juicy texture, and a natural fibrous texture. With respect to the evaluation point, as compared with the control, the case where the plot using a combination of arginine, TG, and calcium chloride or magnesium chloride was very excellent was designated as "A"; the case where the subject plot was excellent was designated as "B"; the case where the subject plot was slightly excellent was designated as "C"; and the case where the subject plot was equal to the control or inferior to the control was designated as "D". The evaluation results are shown in Table 21.

As shown in Table 21, it has become clear that in all of the food systems, by using a combination of arginine, TG, and calcium chloride or magnesium chloride, an excellent food texture relative to the control is revealed. Above all, the effect in the food system using a minced meat was especially excellent. In addition, while not shown in the table, by using a combination of arginine, TG, and calcium chloride or magnesium chloride, "passage of chopsticks" became very good in the food system using a minced meat. This is a novel effect which cannot be imparted by the sole addition of arginine, TG, calcium chloride, or magnesium chloride. Incidentally, the "passage of chopsticks" is a sense such that when a pair of chopsticks is put into a hamburger steak or the like, cutting can be smoothly achieved while keeping the shape. From the foregoing results, it has been demonstrated that the present invention using a combination of arginine, TG, and a calcium salt or a magnesium salt for processed meat foods is able to be used for general purposes.

**Table 21**

| | | Arg + TG + CaCl₂ | Arg + TG + MgCl₂ | Evaluation point |
|---|---|---|---|---|
| Finely minced system | Sausage | A | A | Had a tender and chewy texture and a juicy texture |
| | Model ham | A | A | |
| Coarsely minced system | Hamburger steak | A | A | Had a granular texture of meat and a juicy texture |
| | Meatball | A | A | |
| Single slice meat system | Fried chicken (marinated) | C | C | |
| | Fried chicken (tumbled) | C | C | |
| | Fried pork cutlet (marinated) | B | B | Had tenderness, a juicy texture, and a natural fibrous texture |
| | Fried pork cullet (tumbled) | B | B | |
| | Grilled meat | C | C | |
| | Dong Po Rou | A | B | |
| | Roast pork | B | B | |

### Example 9 (Reference only)

A solution obtained by previously dissolving each of additives shown in Table 22 in 10 g of distilled water was added to and mixed with 100 g of a meat in a paste form in the same method as that in Example 1, thereby preparing a pork gel. The same arginine and transglutaminase as those used in Example 1 were used. As for the obtained data of yield and breaking strength, the theoretical yield and breaking strength of a plot added with a combination of TG and arginine were calculated and analyzed based on the results in a plot added with only TG and a plot added with only arginine. For example, in the case of Test Plot 59 added with 0.001 g of arginine per gram of the meat and 0.1 U of TG per gram of the meat, the sum of a change of breaking strength of Test Plot 5 added with 0.001 g of arginine per gram of the meat relative to the control and a change of breaking strength of Test Plot 14 added with 0.1 U of TG per gram of the meat to the control becomes a theoretical value of a change of breaking strength of Test Plot 59 relative to the control. It is meant that if the change of breaking strength in an observed value of Test Plot 59 relative to the control is equal to this theoretical value, an effect in accordance with theory, namely an additive effect is revealed, whereas if the change of breaking strength in an observed value of Test Plot 59 relative to the control is larger than the theoretical value, an effect exceeding the theory, namely a synergistic effect is revealed. By adopting the foregoing method, in all of the combined use test plots of Test Plots 19 to 99, the synergistic effect regarding each of the yield and the breaking strength was analyzed.

**Table 22**

| Test Plot | 1 | 2 | 3 | 4 | 5 | 6 | 7 | 8 | 9 | 10 |
|---|---|---|---|---|---|---|---|---|---|---|
| Arg (g) | 0.00001 | 0.0001 | 0.001 | 0.01 | 0.1 | 1 | 5 | 10 | 15 | |
| TG (U) | | | | | | | | | | 0.001 |

| Test Plot | 11 | 12 | 13 | 14 | 15 | 16 | 17 | 18 | 19 | 20 |
|---|---|---|---|---|---|---|---|---|---|---|
| Arg (g) | | | | | | | | | 0.00001 | 0.00001 |
| TG (U) | 0.01 | 0.1 | 1 | 10 | 100 | 1000 | 10000 | 100000 | 0.001 | 0.01 |

| Test Plot | 21 | 22 | 23 | 24 | 25 | 26 | 27 | 28 | 29 | 30 |
|---|---|---|---|---|---|---|---|---|---|---|
| Arg (g) | 0.00001 | 0.00001 | 0.00001 | 0.00001 | 0.00001 | 0.00001 | 0.00001 | 0.0001 | 0.0001 | 0.0001 |
| TG (U) | 0.1 | 1 | 10 | 100 | 1000 | 10000 | 100000 | 0.001 | 0.01 | 0.1 |

| Test Plot | 31 | 32 | 33 | 34 | 35 | 36 | 37 | 38 | 39 | 40 |
|---|---|---|---|---|---|---|---|---|---|---|
| Arg (g) | 0.0001 | 0.0001 | 0.0001 | 0.0001 | 0.0001 | 0.0001 | 0.001 | 0.001 | 0.001 | 0.001 |
| TG (U) | 1 | 10 | 100 | 1000 | 10000 | 100000 | 0.001 | 0.01 | 0.1 | 1 |

| Test Plot | 41 | 42 | 43 | 44 | 45 | 46 | 47 | 48 | 49 | 50 |
|---|---|---|---|---|---|---|---|---|---|---|
| Arg (g) | 0.001 | 0.001 | 0.001 | 0.001 | 0.001 | 0.01 | 0.01 | 0.01 | 0.01 | 0.01 |
| TG (U) | 10 | 100 | 1000 | 10000 | 100000 | 0.001 | 0.01 | 0.1 | 1 | 10 |

| Test Plot | 51 | 52 | 53 | 54 | 55 | 56 | 57 | 58 | 59 | 60 |
|---|---|---|---|---|---|---|---|---|---|---|
| Arg (g) | 0.01 | 0.01 | 0.01 | 0.01 | 0.1 | 0.1 | 0.1 | 0.1 | 0.1 | 0.1 |
| TG (U) | 100 | 1000 | 10000 | 100000 | 0.001 | 0.01 | 0.1 | 1 | 10 | 100 |

| Test Plot | 61 | 62 | 63 | 64 | 65 | 66 | 67 | 68 | 69 | 70 |
|---|---|---|---|---|---|---|---|---|---|---|
| Arg (g) | 0.1 | 0.1 | 0.1 | 1 | 1 | 1 | 1 | 1 | 1 | 1 |
| TG (U) | 1000 | 10000 | 100000 | 0.001 | 0.01 | 0.1 | 1 | 10 | 100 | 1000 |

| Test Plot | 71 | 72 | 73 | 74 | 75 | 76 | 77 | 78 | 79 | 80 |
|---|---|---|---|---|---|---|---|---|---|---|
| Arg (g) | 1 | 1 | 5 | 5 | 5 | 5 | 5 | 5 | 5 | 5 |
| TG (U) | 10000 | 100000 | 0.001 | 0.01 | 0.1 | 1 | 10 | 100 | 1000 | 10000 |

| Test Plot | 81 | 82 | 83 | 84 | 85 | 86 | 87 | 88 | 89 | 90 |
|---|---|---|---|---|---|---|---|---|---|---|
| Arg (g) | 5 | 10 | 10 | 10 | 10 | 10 | 10 | 10 | 10 | 10 |
| TG (U) | 100000 | 0.001 | 0.01 | 0.1 | 1 | 10 | 100 | 1000 | 10000 | 100000 |

| Test Plot | 91 | 92 | 93 | 94 | 95 | 96 | 97 | 98 | 99 | |
|---|---|---|---|---|---|---|---|---|---|---|
| Arg (g) | 15 | 15 | 15 | 15 | 15 | 15 | 15 | 15 | 15 | |
| TG (U) | 0.001 | 0.01 | 0.1 | 1 | 10 | 100 | 1000 | 10000 | 100000 | |

In Test Plots 19 to 99 that are a plot using a combination of arginine and TG, an increased difference in the yield relative to each control is shown in Table 23, and an increased difference in the breaking strength relative to each control is shown in Table 24. In Tables 23 and 24, a synergistic effect was confirmed in a gray hatched region. Incidentally, in Tables 23 and 24, the case where an enhancement effect in the yield or breaking strength was perceived, and the overall evaluation was suitable was designated as "A"; the case where the effect was present, and the overall evaluation was not unsuitable was designated as "B"; and the case where the effect was considerably low, or the overall evaluation was not suitable was designated as "C". From the above, it has been revealed that the synergistic effect for processed meat foods is exhibited in a region where the addition amount of arginine is from 0.000001 g to 0.1 g per gram of the meat raw material, the addition amount of TG is from 0.0001 U to 100 U per gram of the meat raw material, and the addition amount of TG is from 0.1 U to 1,000,000 U per gram of the arginine; and preferably a region where the addition amount of arginine is from 0.00001 g to 0.05 g per gram of the meat raw material, the addition amount of TG is from 0.001 U to 10 U per gram of the meat raw material, and the addition amount of TG is from 1 U to 100,000 U per gram of the arginine.

**Table 23**

| Increase width in yield relative to each control | | | Arg (g/g-meat) | | | | | | | | | |
|---|---|---|---|---|---|---|---|---|---|---|---|---|
| | | | | C | B | A | A | A | A | A | B | C |
| | | | 0 | 1.E-07 | 1.E-06 | 0.E-05 | 0.0001 | 0.001 | 0.01 | 0.05 | 0.1 | 0.15 |
| TG (U/g-meat) | | 0 | | 0.12 | 1.21 | 2.64 | 3.22 | 5.42 | 14.27 | 18.21 | 19.68 | 20.55 |
| | C | 1E-05 | -0.06 | 0.13 | 1.23 | 2.67 | 3.21 | 5.4 | 14.26 | 18.22 | 19.63 | 20.55 |
| | B | 0.0001 | -0.04 | 0.11 | 1.26 | 2.66 | 3.25 | 5.43 | 14.29 | 18.18 | 19.65 | 20.57 |
| | A | 0.001 | -0.11 | 0.11 | 1.23 | 2.54 | 3.24 | 5.51 | 14.29 | 18.2 | 19.61 | 20.54 |
| | A | 0.01 | -0.19 | 0.3 | 1.25 | 2.55 | 3.1 | 5.49 | 14.23 | 18.07 | 19.58 | 20.52 |
| | A | 0.1 | -0.68 | 0.18 | 1.02 | 2.48 | 2.95 | 5.18 | 14.06 | 18.03 | 19.33 | 20.2 |
| | A | 1 | -6.25 | -1.06 | -0.25 | 0.04 | 2.27 | 4.31 | 13.81 | 16.85 | 18.25 | 19.63 |
| | A | 10 | -10.75 | -7.36 | -5.98 | -3.5 | -1.39 | -0.99 | 9.55 | 13.21 | 15.48 | 17.24 |
| | B | 100 | -12.15 | -11.44 | -9.84 | -7.44 | -2.6 | -1.81 | 6.33 | 11.44 | 13.62 | 15.5 |
| | C | 1000 | -15.94 | -13.87 | -12.38 | -10.38 | -4.59 | -2.46 | 2.21 | 8.04 | 10.39 | 13.06 |

**Table 24**

| Increase width in breaking strength relative to each control | | | Arg (g/g-meat) | | | | | | | | | |
|---|---|---|---|---|---|---|---|---|---|---|---|---|
| | | | | C | B | A | A | A | A | A | B | C |
| | | | 0 | 1.E-07 | 1.E-06 | 0.E-05 | 0.0001 | 0.001 | 0.01 | 0.05 | 0.1 | 0.15 |
| TG (U/g-meat) | | 0 | | 1.2 | 1.8 | 4.6 | 19.9 | 37.5 | 158.4 | 382.1 | 649.3 | 706.3 |
| | C | 1E-05 | 2.0 | 2.7 | 3.7 | 7.2 | 21.2 | 39.0 | 160.0 | 382.1 | 645.4 | 705.9 |
| | B | 0.0001 | 6.5 | 6.7 | 14.2 | 18.0 | 62.5 | 89.4 | 172.1 | 397.0 | 655.7 | 710.0 |
| | A | 0.001 | 15.7 | 16.0 | 21.3 | 26.0 | 98.9 | 128.0 | 322.4 | 412.1 | 675.5 | 721.9 |
| | A | 0.01 | 42.0 | 41.4 | 48.0 | 53.3 | 132.2 | 195.3 | 342.7 | 461.8 | 739.9 | 768.9 |
| | A | 0.1 | 105.3 | 105.9 | 116.9 | 171.2 | 251.9 | 333.1; | 424.3 | 575.6 | 834.3 | 899.6 |
| | A | 1 | 286.5 | 287.2 | 301.1 | 324.7 | 386.7 | 583.3 | 679.9 | 814.2 | 1003.9 | 1132.1 |
| | A | 10 | 571.1 | 572.1 | 578.1 | 606.6 | 685.9 | 761.4 | 863.0 | 1045.4 | 1138.1 | 1196.4 |
| | B | 100 | 735.8 | 734.2 | 736.2 | 740.3 | 772.0 | 876.6 | 931.2 | 1156.9 | 1206.8 | 1265.7 |
| | C | 1000 | 844.4 | 843.5 | 845.6 | 848.3 | 861.1 | 880.3 | 958.5 | 1184.0 | 1232.0 | 1271.1 |

### Example 10

A solution obtained by previously dissolving each of additives shown in Table 25 in 10 g of distilled water was added to and mixed with 100 g of a meat in a paste form in the same method as that in Example 1, thereby preparing a pork gel. The same arginine, transglutaminase, and calcium chloride as those used in Example 1 were used. As for the obtained data of breaking strength, the theoretical breaking strength of a plot added with a combination of the three ingredients was calculated and analyzed based on the results in a plot added with only arginine, a plot added with only TG, and a plot added with only calcium chloride. For example, in the case of Test Plot 60 added with 0.001 g of arginine per gram of the meat, 0.1 U of TG per gram of the meat, and 0.00081 g of calcium chloride as reduced into calcium per gram of the meat, the sum of a change of breaking strength of Test Plot 5 added with 0.001 g of arginine per gram of the meat relative to the control, a change of breaking strength of Test Plot 14 added with 0.1 U of TG per gram of the meat relative to the control, and a change of breaking strength of Test Plot 19 added with 0.00081 g of calcium chloride as reduced into calcium per gram of the meat relative to the control becomes a theoretical value of a change of breaking strength of Test Plot 60 relative to the control. It is meant that if the amount of change of breaking strength in an observed value of Test Plot 60 relative to the control is equal to this theoretical value, an effect in accordance with theory, namely an additive effect is revealed, whereas if the amount of change of breaking strength in an observed value of Test Plot 60 relative to the control is larger than the theoretical value, an effect exceeding the theory, namely a synergistic effect is revealed. By adopting the foregoing method, in all of the test plots of Test Plots 20 to 100 using a combination of the three ingredients, the synergistic effect regarding the breaking strength was analyzed.

In Test Plots 20 to 100 that are a plot using a combination of arginine, TG, and calcium chloride, an increased difference in the breaking strength relative to each control is shown in Table 26. In Table 26, a synergistic effect was confirmed in a gray hatched region. Incidentally, in Table 26, the case where an enhancement effect in the breaking strength was perceived, and the overall evaluation was suitable was designated as "A"; the case where the effect was present, and the overall evaluation was not unsuitable was designated as "B"; and the case where the effect was considerably low, or the overall evaluation was not suitable was designated as "C". From the above, it has been revealed that the synergistic effect for processed meat foods is exhibited in a region where the addition amount of arginine is from 0.000001 g to 0.1 g per gram of the meat raw material, the addition amount of TG is from 0.0001 U to 100 U per gram of the meat raw material, and the addition amount of TG is from 0.1 U to 1,000,000 U per gram of the arginine; and preferably a region where the addition amount of arginine is from 0.00001 g to 0.05 g per gram of the meat raw material, the addition amount of TG is from 0.001 U to 10 U per gram of the meat raw material, and the addition amount of TG is from 1 U to 100,000 U per gram of the arginine.

**Table 25**

| Test Plot | 1 | 2 | 3 | 4 | 5 | 6 | 7 | 8 | 9 | 10 |
|---|---|---|---|---|---|---|---|---|---|---|
| Arg (g) | 0.00001 | 0.0001 | 0.001 | 0.01 | 0.1 | 1 | 5 | 10 | 15 | |
| TG (U) | | | | | | | | | | 0.001 |
| Calcium chloride (g) | | | | | | | | | | |

| Test Plot | 11 | 12 | 13 | 14 | 15 | 16 | 17 | 18 | 19 | 20 |
|---|---|---|---|---|---|---|---|---|---|---|
| Arg (g) | | | | | | | | | | 0.00001 |
| TG (U) | 0.01 | 0.1 | 1 | 10 | 100 | 1000 | 10000 | 100000 | | 0.001 |
| Calcium chloride (g) | | | | | | | | | 0.3 | 0.3 |

| Test Plot | 21 | 22 | 23 | 24 | 25 | 26 | 27 | 28 | 29 | 30 |
|---|---|---|---|---|---|---|---|---|---|---|
| Arg (g) | 0.00001 | 0.00001 | 0.00001 | 0.00001 | 0.00001 | 0.00001 | 0.00001 | 0.00001 | 0.0001 | 0.0001 |
| TG (U) | 0.01 | 0.1 | 1 | 10 | 100 | 1000 | 10000 | 100000 | 0.001 | 0.01 |
| Calcium chloride (g) | 0.3 | 0.3 | 0.3 | 0.3 | 0.3 | 0.3 | 0.3 | 0.3 | 0.3 | 0.3 |

| Test Plot | 31 | 32 | 33 | 34 | 35 | 36 | 37 | 38 | 39 | 40 |
|---|---|---|---|---|---|---|---|---|---|---|
| Arg (g) | 0.0001 | 0.0001 | 0.0001 | 0.0001 | 0.0001 | 0.0001 | 0.0001 | 0.001 | 0.001 | 0.001 |
| TG (U) | 0.1 | 1 | 10 | 100 | 1000 | 10000 | 100000 | 0.001 | 0.01 | 0.1 |
| Calcium chloride (g) | 0.3 | 0.3 | 0.3 | 0.3 | 0.3 | 0.3 | 0.3 | 0.3 | 0.3 | 0.3 |

| Test Plot | 41 | 42 | 43 | 44 | 45 | 46 | 47 | 48 | 49 | 50 |
|---|---|---|---|---|---|---|---|---|---|---|
| Arg (g) | 0.001 | 0.001 | 0.001 | 0.001 | 0.001 | 0.001 | 0.01 | 0.01 | 0.01 | 0.01 |
| TG (U) | 1 | 10 | 100 | 1000 | 10000 | 100000 | 0.001 | 0.01 | 0.1 | 1 |
| Calcium chloride (g) | 0.3 | 0.3 | 0.3 | 0.3 | 0.3 | 0.3 | 0.3 | 0.3 | 0.3 | 0.3 |

| Test Plot | 51 | 52 | 53 | 54 | 55 | 56 | 57 | 58 | 59 | 60 |
|---|---|---|---|---|---|---|---|---|---|---|
| Arg (g) | 0.01 | 0.01 | 0.01 | 0.01 | 0.01 | 0.1 | 0.1 | 0.1 | 0.1 | 0.1 |
| TG(U) | 10 | 100 | 1000 | 10000 | 100000 | 0.001 | 0.01 | 0.1 | 1 | 10 |
| Calcium chloride (g) | 0.3 | 0.3 | 0.3 | 0.3 | 0.3 | 0.3 | 0.3 | 0.3 | 0.3 | 0.3 |

| Test Plot | 61 | 62 | 63 | 64 | 65 | 66 | 67 | 68 | 69 | 70 |
|---|---|---|---|---|---|---|---|---|---|---|
| Arg (g) | 0.1 | 0.1 | 0.1 | 0.1 | 1 | 1 | 1 | 1 | 1 | 1 |
| TG (U) | 100 | 1000 | 10000 | 100000 | 0.001 | 0.01 | 0.1 | 1 | 10 | 100 |
| Calcium chloride (g) | 0.3 | 0.3 | 0.3 | 0.3 | 0.3 | 0.3 | 0.3 | 0.3 | 0.3 | 0.3 |

| Test Plot | 71 | 72 | 73 | 74 | 75 | 76 | 77 | 78 | 79 | 80 |
|---|---|---|---|---|---|---|---|---|---|---|
| Arg (g) | 1 | 1 | 1 | 5 | 5 | 5 | 5 | 5 | 5 | 5 |
| TG (U) | 1000 | 10000 | 100000 | 0.001 | 0.01 | 0.1 | 1 | 10 | 100 | 1000 |
| Calcium chloride (q) | 0.3 | 0.3 | 0.3 | 0.3 | 0.3 | 0.3 | 0.3 | 0.3 | 0.3 | 0.3 |

| Test Plot | 81 | 82 | 83 | 84 | 85 | 86 | 87 | 88 | 89 | 90 |
|---|---|---|---|---|---|---|---|---|---|---|
| Arg (g) | 5 | 5 | 10 | 10 | 10 | 10 | 10 | 10 | 10 | 10 |
| TG (U) | 10000 | 100000 | 0.001 | 0.01 | 0.1 | 1 | 10 | 100 | 1000 | 10000 |
| Calcium chloride (q) | 0.3 | 0.3 | 0.3 | 0.3 | 0.3 | 0.3 | 0.3 | 0.3 | 0.3 | 0.3 |

| Test Plot | 91 | 92 | 93 | 94 | 95 | 96 | 97 | 98 | 99 | 100 |
|---|---|---|---|---|---|---|---|---|---|---|
| Arg (g) | 10 | 15 | 15 | 15 | 15 | 15 | 15 | 15 | 15 | 15 |
| TG (U) | 100000 | 0.001 | 0.01 | 0.1 | 1 | 10 | 100 | 1000 | 10000 | 100000 |
| Calcium chloride (g) | 0.3 | 0.3 | 0.3 | 0.3 | 0.3 | 0.3 | 0.3 | 0.3 | 0.3 | 0.3 |

**Table 26**

| Increase width in breaking strength relative to each control | | | Arg (g/g-meat) | | | | | | | | | |
|---|---|---|---|---|---|---|---|---|---|---|---|---|
| | | | | C | B | A | A | A | A | A | B | C |
| | | | 0 | 1.E-07 | 1.E-06 | 0.E-05 | 0.0001 | 0.001 | 0.01 | 0.05 | 0.1 | 0.15 |
| TG (U/g-meat) | | 0 | | 2.0 | 2.1 | 7.3 | 20.3 | 40.9 | 196.9 | 461.2 | 781.2 | 812.2 |
| | C | 1E-05 | 2.2 | 1.2 | 3.0 | 9.3 | 23.4 | 41.3 | 198.0 | 460.6 | 777.2 | 813.0 |
| | B | 0.0001 | 6.5 | 4.3 | 10.8 | 32.4 | 80.0 | 112.1 | 213.1 | 466.6 | 784.3 | 815.3 |
| | A | 0.001 | 35.2 | 36.0 | 40.1 | 51.1' | 114.8 | 163.3 | 348.0 | 490.2 | 819.4 | 845.0 |
| | A | 0.01 | 48.3 | 49.0 | 56.9 | 73.3 | 146.9 | 244.5 | 371.3 | 521.1 | 840.0 | 856.1 |
| | A | 0.1 | 128.1 | 125.5 | 136.2 | 212.3 | 273.2 | 389.5 | 491.2 | 625.1 | 918.3 | 926.0 |
| | A | 1 | 341.4 | 338.1 | 348.9 | 370.9 | 391.2 | 612.4 | 761.2 | 891.4 | 1200.1 | 1211.1 |
| | A | 10 | 702.6 | 700.5 | 701.2 | 712.2 | 735.2 | 774.4 | 921.4 | 1170.0 | 1311.3 | 1280.0 |
| | B | 100 | 926.3 | 929.0 | 926.0 | 832.3 | 922.2 | 993.3 | 1142.2 | 1390.1 | 1344.0 | 1310.1 |
| | C | 1000 | 980.0 | 976.2 | 980.8 | 986.4 | 993.3 | 1011.4 | 1161.3 | 1395.2 | 1398.5 | 1314.3 |

### Example 11

A solution obtained by previously dissolving each of additives shown in Table 27 in 10 g of distilled water was added to and mixed with 100 g of a meat in a paste form in the same method as that in Example 1, thereby preparing a pork gel. The same arginine, transglutaminase, and calcium chloride as those used in Example 1 were used. As for the obtained data of breaking strength, the theoretical breaking strength of a plot added with a combination of the three ingredients was calculated and analyzed based on the results in a plot added with only arginine, a plot added with only TG, and a plot added with only calcium chloride. For example, in the case of Test Plot 65 added with 0.001 g of arginine per gram of the meat, 0.58 U of TG per gram of the meat, and 0.001 g of calcium chloride as reduced into calcium per gram of the meat, the sum of a change of breaking strength of Test Plot 5 added with 0.001 g of arginine per gram of the meat relative to the control, a change of breaking strength of Test Plot 10 added with 0.58 U of TG per gram of the meat relative to the control, and a change of breaking strength of Test Plot 15 added with 0.001 g of calcium chloride as reduced into calcium per gram of the meat relative to the control becomes a theoretical value of a change of breaking strength of Test Plot 65 relative to the control. It is meant that if the change of breaking strength in an observed value of Test Plot 65 relative to the control is equal to this theoretical value, an effect in accordance with theory, namely an additive effect is revealed, whereas if the change of breaking strength in an observed value of Test Plot 65 relative to the control is larger than the theoretical value, an effect exceeding the theory, namely a synergistic effect is revealed. By adopting the foregoing method, in all of the test plots of Test Plots 21 to 110 using a combination of the three ingredients, the synergistic effect regarding the breaking strength was analyzed.

**Table 27**

| Test Plot | 1 | 2 | 3 | 4 | 5 | 6 | 7 | 8 | 9 | 10 |
|---|---|---|---|---|---|---|---|---|---|---|
| Arg (g) | 0.00001 | 0.0001 | 0.001 | 0.01 | 0.1 | 1 | 5 | 10 | 15 | |
| TG (U) | | | | | | | | | | 58 |
| Calcium chloride (g) | | | | | | | | | | |

| Test Plot | 11 | 12 | 13 | 14 | 15 | 16 | 17 | 18 | 19 | 20 |
|---|---|---|---|---|---|---|---|---|---|---|
| Arg (g) | | | | | | | | | | |
| TG (U) | | | | | | | | | | |
| Calcium chloride (g) | 0.00004 | 0.0004 | 0.004 | 0.04 | 0.4 | 1.8 | 3.7 | 7.3 | 18.3 | 37 |

| Test Plot | 21 | 22 | 23 | 24 | 25 | 26 | 27 | 28 | 29 | 30 |
|---|---|---|---|---|---|---|---|---|---|---|
| Arg (g) | 0.00001 | 0.00001 | 0.00001 | 0.00001 | 0.00001 | 0.00001 | 0.00001 | 0.00001 | 0.00001 | 0.00001 |
| TG (U) | 58 | 58 | 58 | 58 | 58 | 58 | 58 | 58 | 58 | 58 |
| Calcium chloride (g) | 0.00004 | 0.0004 | 0.004 | 0.04 | 0.4 | 1.8 | 3.7 | 7.3 | 18.3 | 37 |

| Test Plot | 31 | 32 | 33 | 34 | 35 | 36 | 37 | 38 | 39 | 40 |
|---|---|---|---|---|---|---|---|---|---|---|
| Arg (g) | 0.0001 | 0.0001 | 0.0001 | 0.0001 | 0.0001 | 0.0001 | 0.0001 | 0.0001 | 0.0001 | 0.0001 |
| TG (U) | 58 | 58 | 58 | 58 | 58 | 58 | 58 | 58 | 58 | 58 |
| Calcium chloride (g) | 0.00004 | 0.0004 | 0.004 | 0.04 | 0.4 | 1.8 | 3.7 | 7.3 | 18.3 | 37 |

| Test Plot | 41 | 42 | 43 | 44 | 45 | 46 | 47 | 48 | 49 | 50 |
|---|---|---|---|---|---|---|---|---|---|---|
| Arg (g) | 0.001 | 0.001 | 0.001 | 0.001 | 0.001 | 0.001 | 0.001 | 0.001 | 0.001 | 0.001 |
| TG (U) | 58 | 58 | 58 | 58 | 58 | 58 | 58 | 58 | 58 | 58 |
| Calcium chloride (g) | 0.00004 | 0.0004 | 0.004 | 0.04 | 0.4 | 1.8 | 3.7 | 7.3 | 18.3 | 37 |

| Test Plot | 51 | 52 | 53 | 54 | 55 | 56 | 57 | 58 | 59 | 60 |
|---|---|---|---|---|---|---|---|---|---|---|
| Arg (g) | 0.01 | 0.01 | 0.01 | 0.01 | 0.01 | 0.01 | 0.01 | 0.01 | 0.01 | 0.01 |
| TG (U) | 58 | 58 | 58 | 58 | 58 | 58 | 58 | 58 | 58 | 58 |
| Calcium chloride (g) | 0.00004 | 0.0004 | 0.004 | 0.04 | 0.4 | 1.8 | 3.7 | 7.3 | 18.3 | 37 |

| Test Plot | 61 | 62 | 63 | 64 | 65 | 66 | 67 | 68 | 69 | 70 |
|---|---|---|---|---|---|---|---|---|---|---|
| Arg (g) | 0.1 | 0.1 | 0.1 | 0.1 | 0.1 | 0.1 | 0.1 | 0.1 | 0.1 | 0.1 |
| TG (U) | 58 | 58 | 58 | 58 | 58 | 58 | 58 | 58 | 58 | 58 |
| Calcium chloride (g) | 0.00004 | 0.0004 | 0.004 | 0.04 | 0.4 | 1.8 | 3.7 | 7.3 | 18.3 | 37 |

| Test Plot | 71 | 72 | 73 | 74 | 75 | 76 | 77 | 78 | 79 | 80 |
|---|---|---|---|---|---|---|---|---|---|---|
| Arg (g) | 1 | 1 | 1 | 1 | 1 | 1 | 1 | 1 | 1 | 1 |
| TG (U) | 58 | 58 | 58 | 58 | 58 | 58 | 58 | 58 | 58 | 58 |
| Calcium chloride (g) | 0.00004 | 0.0004 | 0.004 | 0.04 | 0.4 | 1.8 | 3.7 | 7.3 | 18.3 | 37 |

| Test Plot | 81 | 82 | 83 | 84 | 85 | 86 | 87 | 88 | 89 | 90 |
|---|---|---|---|---|---|---|---|---|---|---|
| Arg (g) | 5 | 5 | 5 | 5 | 5 | 5 | 5 | 5 | 5 | 5 |
| TG (U) | 58 | 58 | 58 | 58 | 58 | 58 | 58 | 58 | 58 | 58 |
| Calcium chloride (g) | 0.00004 | 0.0004 | 0.004 | 0.04 | 0.4 | 1.8 | 3.7 | 7.3 | 18.3 | 37 |

| Test Plot | 91 | 92 | 93 | 94 | 95 | 96 | 97 | 98 | 99 | 100 |
|---|---|---|---|---|---|---|---|---|---|---|
| Arg (g) | 10 | 10 | 10 | 10 | 10 | 10 | 10 | 10 | 10 | 10 |
| TG (U) | 58 | 58 | 58 | 58 | 58 | 58 | 58 | 58 | 58 | 58 |
| Calcium chloride (g) | 0.00004 | 0.0004 | 0.004 | 0.04 | 0.4 | 1.8 | 3.7 | 7.3 | 18.3 | 37 |

| Test Plot | 101 | 102 | 103 | 104 | 105 | 106 | 107 | 108 | 109 | 110 |
|---|---|---|---|---|---|---|---|---|---|---|
| Arg (g) | 15 | 15 | 15 | 15 | 15 | 15 | 15 | 15 | 15 | 15 |
| TG (U) | 58 | 58 | 58 | 58 | 58 | 58 | 58 | 58 | 58 | 58 |
| Calcium chloride (g) | 0.00004 | 0.0004 | 0.004 | 0.04 | 0.4 | 1.8 | 3.7 | 7.3 | 18.3 | 37 |

In Test Plots 21 to 110 that are a plot using a combination of arginine, TG, and calcium chloride, an increased difference in the breaking strength relative to each control is shown in Table 28. In Tables 28, a synergistic effect was confirmed in a gray hatched region. Incidentally, in Table 28, the case where an enhancement effect in the breaking strength was perceived, and the overall evaluation was suitable was designated as "A"; the case where the effect was present, and the overall evaluation was not unsuitable was designated as "B"; and the case where the effect was considerably low, or the overall evaluation was not suitable was designated as "C". From the above, it has been revealed that the synergistic effect for processed meat foods is exhibited in a region where the addition amount of arginine is from 0.000001 g to 0.1 g per gram of the meat raw material, the addition amount of calcium chloride is from 0.000001 g to 0.05 g as reduced into calcium per gram of the meat raw material, and the addition amount of calcium chloride is from 0.0001 g to 1,000 g as reduced into calcium per gram of the arginine; and preferably a region where the addition amount of arginine is from 0.00001 g to 0.05 g per gram of the meat raw material, the addition amount of calcium chloride is from 0.00001 g to 0.02 g as reduced into calcium per gram of the meat raw material, and the addition of calcium chloride is from 0.001 g of 500 g as reduced into calcium per gram of the arginine.

**Table 28**

| Increase width in breaking strength relative to control | | | Arg (g/g-meat) | | | | | | | | | |
|---|---|---|---|---|---|---|---|---|---|---|---|---|
| | | | | C | B | A | A | A | A | A | B | C |
| | | | 0 | 1.E-07 | 1.E-06 | 0.E-05 | 0.0001 | 0.001 | 0.01 | 0.05 | 0.1 | 0.15 |
| Ca (g/g-meat) | | 0 | | 1.1 | 2.1 | 6.6 | 23.0 | 44.1 | 229.6 | 473.4 | 761.3 | 803.1 |
| | C | 1E-07 | 1.7 | 202.1 | 205.6 | 210.0 | 235.9 | 331.2 | 676.1 | 760.2 | 985.3 | 1001.2 |
| | B | 1E-06 | 1.3 | 204.3 | 205.8 | 211.1 | 237.4 | 338.3 | 700.1 | 782.5 | 1002.2 | 1028.1 |
| | A | 1E-05 | 3.0 | 206.2 | 210.9 | 223.8 | 248.9 | 340.2 | 852.8 | 891.7 | 1021.3 | 1035.5 |
| | A | 0.0001 | 1.1 | 212.7 | 218.0 | 228.0 | 261.1 | 388.0 | 904.0 | 951.6 | 1073.4 | 1100.2 |
| | A | 0.001 | 0.7 | 220.9 | 225.9 | 236.1 | 275.1 | 421.2 | 963.7 | 1021.3 | 1131.0 | 1152.9 |
| | A | 0.005 | 1.7 | 237.1 | 240.3 | 255.9 | 315.4 | 483.6 | 1005.3 | 1089.9 | 1160.4 | 1186.0 |
| | A | 0.01 | 12.3 | 212.0 | 213.8 | 226.8 | 288.3 | 486.3 | 1031.4 | 1101.5 | 1188.0 | 1201.5 |
| | A | 0.02 | 38.0 | 201.4 | 208.7 | 217.0 | 277.2 | 471.1 | 1013.4 | 1120.2 | 1209.4 | 1221.3 |
| | B | 0.05 | 21.6 | 186.2 | 199.7 | 200.2 | 258.4 | 452.2 | 981.2 | 1113.0 | 1121.2 | 1150.8 |
| | C | 0.1 | 13.5 | 151.0 | 173.3 | 181.4 | 231.4 | 408.6 | 930.0 | 1031.2 | 980.9 | 1005.4 |

### Comparative Example 1

As described above, there is reported a method of improving the preservability of foods by using a combination of protamine that is an arginine-rich protein and TG (Japanese Patent No. 3940816). Then, the present invention using a combination of arginine and TG was compared with the method of using a combination of arginine and protamine. A solution obtained by previously dissolving each of additives shown in Table 29 in 10 g of distilled water was added to and mixed with 100 g of a meat in a paste form in the same method as that in Example 1, thereby preparing a pork gel. Incidentally, in the working examples shown in Japanese Patent No. 3940816, the preparation of a pork gel is carried out under the same addition amounts as those in Test Plot 5 of Table 29. The same arginine and transglutaminase as those used in Example 1 were used, and "MC-70" (manufactured by Ueno Fine Chemicals Industry, Ltd.) was used for the protamine. Incidentally, in the present report, there maybe the case where the protamine is abbreviated and expressed as "Pro". The addition amount of the arginine is shown in terms of % by weight relative to the meat raw material, the addition amount of TG is shown in terms of an addition unit (U) per gram of the meat raw material, and the addition amount of the protamine is shown in terms of % by weight relative to the meat raw material as reduced into protamine contained in the above-described preparation. The measurement results of the breaking strength and the yield are shown in FIG. 4.

As shown in FIG. 4, in Test Plots 3 and 4 added with protamine solely, though the breaking strength increased, the yield was lowered, and in Test Plots 5 and 6 added with a combination of protamine and TG, though the breaking strength more increased, the yield was more lowered. According to the sole addition of TG in Test Plot 2, the breaking strength increased, and the yield was lowered, and therefore, it was thought that the effect due to the use of a combination of protamine and TG is additive. On the other hand, in Test Plot 8 using a combination of arginine and TG, the breaking strength largely increased, and a lowering of the yield was not found, as compared with Test Plot 7 added with arginine solely. Accordingly, it has become clear that the synergistic modification effect due to the use of a combination of arginine and TG is quite different from the effect due to the use of a combination of protamine and TG.

**Table 29**

| Test Plot | 1 | 2 | 3 | 4 | 5 | 6 | 7 | 8 | 9 |
|---|---|---|---|---|---|---|---|---|---|
| Arg (g) | | | | | | | 0.2 | 0.2 | 0.3 |
| TG (U) | | 29 | | | 29 | 29 | | 29 | 38 |
| Protamine (g) | | | 0.02 | 0.2 | 0.02 | 0.2 | | | |

### Comparative Example 2

As described above, there is reported a method of modifying the food texture of hams by using a combination of transglutaminase and magnesium chloride (WO2010-074338). In addition, there is disclosed knowledge which is concerned with an application of bound and formed foods but which is concerned with the use of a combination of transglutaminase and calcium chloride or magnesium chloride in the field of processed meat foods (WO2010-035856). Then, the present invention using a combination of arginine or its salt, TG, and a calcium salt or a magnesium salt was compared with the method of using a combination of TG and calcium chloride or magnesium chloride. A solution obtained by previously dissolving each of additives shown in Table 30 in 10 g of distilled water was added to and mixed with 100 g of a meat in a paste form in the same method as that in Example 1, thereby preparing a pork gel. The measurement results of the breaking strength are shown in Table 7. Incidentally, the addition amount of each of the arginine, calcium chloride, and magnesium chloride is shown in terms of a weight per gram of the meat raw material, and the addition amount of TG is shown in terms of an addition unit (U) per gram of the meat raw material.

**Table 30**

| | 1 | 2 | 3 | 4 | 5 | 6 | 7 | 8 |
|---|---|---|---|---|---|---|---|---|
| Arg (g) | | | | | 0.3 | 0.3 | 0.3 | 0.3 |
| TG (U) | | 38 | 38 | 38 | | 38 | 38 | 38 |
| CaCl₂ (g) | | 0.3 | | | | 0.3 | | |
| MgCl₂ (g) | | | 0.3 | 0.8 | | | 0.3 | 0.8 |

In addition, the theoretical breaking strength of a plot added with a combination of arginine, TG, and calcium chloride or magnesium chloride was calculated and analyzed based on the results in a plot added with arginine solely and a plot using a combination of TG and calcium chloride or magnesium chloride. For example, in the case of Test Plot 6 added with 0.3% of arginine, 0.38 U of TG per gram of the raw material meat, and 0.3% of calcium chloride, a change of breaking strength of Test Plot 2 relative to the control is "395.03 g", and a change of breaking strength of Test Plot 5 relative to the control is "124.14 g", and therefore, in Test Plot 6 added with the same amounts of these materials, a change of breaking strength relative to the control should become theoretically "519.17 g" (395.03 g + 124.14 g) that is the sum of these values. This value was defined as a theoretical value. It is meant that if the amount of change in an observed value relative to the control is equal to such a theoretical value, an effect in accordance with theory, namely an additive effect is revealed, whereas if the amount of change in an observed value relative to the control is larger than such a theoretical value, an effect exceeding the theory, namely a synergistic effect is revealed.

As shown in Table 31, amounts of increase in the breaking strength in Test Plots 6 to 8 using a combination of arginine, TG, and calcium chloride or magnesium chloride (hatched portions in Table 31) relative to the control were values larger than the theoretical values. Accordingly, it has been demonstrated that by gathering the effect due to the use of a combination of TG and calcium chloride or magnesium chloride and the effect due to arginine, a synergistic effect is obtained in the breaking strength. From the above, it has become clear that the present invention is a very excellent means for modifying the food texture, an aspect of which has not been able to be supposed from the knowledge so far.

**Table 31**

| Test Plot | Breaking strength (g) | | |
|---|---|---|---|
| | Observed value | Difference from the control | Theoretical value |
| 1. Control | 928.02 | | |
| 2. TG + CaCl₂ (0.3%) | 1323.04 | 395.03 | |
| 3. TG + MgCl₂ (0.3%) | 1348.61 | 420.59 | |
| 4. TG + MgCl₂ (0.8%) | 1509.79 | 581.77 | |
| 5. Arg (0.3%) | 1052.15 | 124.14 | |
| 6. Arg (0.3%) + TG + CaCl₂ (0.3%) | 1839.22 | 911.20 | 519.17 |
| 7. Arg (0.3%) + TG + MgCl₂ (0.3%) | 1701.42 | 773.41 | 544.73 |
| 8. Arg (0.3%) + TG + MgCl₂ (0.8%) | 1783.16 | 855.14 | 705.91 |

### Industrial Applicability

According to the present invention, the quality of processed meat foods can be enhanced, and hence, the present invention is extremely useful in the field of foods.

## Claims

1. A method for producing a processed meat food from meat raw material derived from pig, cow, fowl, sheep, goat, horse, camel, pigeon, wild duck, domestic duck, quail, or alpaca, comprising:
using arginine or its salt and transglutaminase,
further comprising using a calcium salt or a magnesium salt, wherein the addition amount of the arginine or its salt is from 0.000001 g to 0.1 g as reduced into arginine per gram of the meat raw material , the addition amount of the transglutaminase is from 0.0001 U to 100 U per gram of the meat raw material , and the addition amount of the calcium salt is from 0.000001 g to 0.05 g as reduced into calcium per gram of the meat raw material , or the addition amount of the magnesium salt is from 0.000001 g to 0.05 g as reduced into magnesium per gram of the meat raw material.

2. The method according to claim 1, wherein the addition amount of the arginine or its salt is from 0.00001 g to 0.05 g as reduced into arginine per gram of the meat raw material , the addition amount of the transglutaminase is from 0.001 U to 10 U per gram of the meat raw material , and the addition amount of the calcium salt is from 0.00001 g to 0.02 g as reduced into calcium per gram of the meat raw material , or the addition amount of the magnesium salt is from 0.00001 g to 0.02 g as reduced into magnesium per gram of the meat raw material.

3. The method according to claim 1, wherein the calcium salt is calcium chloride, or the magnesium salt is magnesium chloride.

## Patentansprüche

1. Verfahren zur Herstellung eines verarbeiteten Fleischlebensmittels aus von Schwein, Rind, Geflügel, Schaf, Ziege, Pferd, Kamel, Taube, Wildente, Hausente, Wachtel oder Alpaka abgeleitetem Fleischausgangsmaterial, welches umfasst:
die Verwendung von Arginin oder seines Salzes und Transglutaminase,
außerdem die Verwendung eines Kalziumsalzes oder Magnesiumsalzes, wobei die zugegebene Menge von Arginin oder seines Salzes 0,000001 g bis 0,1 g, als in Arginin reduzierte Form, pro Gramm des Fleischausgangsmaterials ist, die zugegebene Menge von Transglutaminase 0,0001 U bis 100 U pro Gramm des Fleischausgangsmaterials ist und die zugegebene Menge des Kalziumsalzes 0,000001 g bis 0,05 g, als in Kalzium reduzierte Form, pro Gramm des Fleischausgangsmaterials ist, oder die zugegebene Menge des Magnesiumsalzes 0,000001 g bis 0,05 g, als in Magnesium reduzierte Form, pro Gramm des Fleischausgangsmaterials ist.

2. Verfahren nach Anspruch 1, wobei die zugegebene Menge des Arginins oder seines Salzes 0,00001 g bis 0,05 g, als in Arginin reduzierte Form, pro Gramm des Fleischausgangsmaterials ist, die zugegebene Menge von Transglutaminase 0,001 U bis 10 U pro Gramm des Fleischausgangsmaterials ist und die zugegebene Menge des Kalziumsalzes 0,00001 g bis 0,02 g, als in Kalzium reduzierte Form, pro Gramm des Fleischausgangsmaterials ist, oder die zugegebene Menge des Magnesiumsalzes 0,00001 g bis 0,02 g, als in Magnesium reduzierte Form, pro Gramm des Fleischausgangsmaterials ist.

3. Verfahren nach Anspruch 1, wobei das Kalziumsalz Kalziumchlorid ist, oder das Magnesiumsalz Magnesiumchlorid ist.

## Revendications

1. Procédé de fabrication de viandes transformées à partir de viandes brutes dérivées du porc, de la vache, de la volaille, du mouton, de la chèvre, du cheval, du chameau, du pigeon, du canard sauvage, du canard domestique, de la caille ou de l'alpaca, comprenant :
l'utilisation d'arginine ou de son sel et de transglutaminase,
comprenant en outre l'utilisation d'un sel de calcium ou d'un sel de magnésium, la quantité d'addition de l'arginine ou de son sel étant de 0,000001 g à 0,1 g telle qu'exprimée en arginine par gramme de la viande brute, la quantité d'addition de la transglutaminase étant de 0,0001 U à 100 U par gramme de la viande brute, et la quantité d'addition du sel de calcium étant de 0,000001 g à 0,05 g telle qu'exprimée en calcium par gramme de la viande brute, ou la quantité d'addition du sel de magnésium étant de 0,000001 g à 0,05 g telle qu'exprimée en magnésium par gramme de la viande brute.

2. Procédé selon la revendication 1, dans lequel la quantité d'addition de l'arginine ou de son sel est de 0,00001 g à 0,05 g telle qu'exprimée en arginine par gramme de la viande brute, la quantité d'addition de la transglutaminase est de 0,001 U à 10 U par gramme de la viande brute, et la quantité d'addition du sel de calcium est de 0,00001 g à 0,02 g telle qu'exprimée en calcium par gramme de la viande brute, ou la quantité d'addition du sel de magnésium est de 0,00001 g à 0,02 g telle qu'exprimée en magnésium par gramme de la viande brute.

3. Procédé selon la revendication 1, dans lequel le sel de calcium est le chlorure calcium, ou le sel de magnésium est le chlorure de magnésium.
